# EUROPEAN PATENT APPLICATION

(11) **EP 4 346 315 A1**
(43) Date of publication of application: **03.04.2024**
(21) Application number: 23200156.0
(22) Date of filing: 27.09.2023
(51) Int. Cl.: H04W 74/00, H04W 72/40, H04W 74/0816, H04W 84/12

(54) **BUFFER STATUS REPORTING FOR TRIGGERED TRANSMISSION OPPORTUNITY SHARING**

(30) Priority: 27.09.2022 US 202263410315 P
(71) Applicant: Comcast Cable Communications LLC, Philadelphia, Pennsylvania 19103 (US)
(72) Inventor: KIM, Jeongki, Philadelphia, 19103 (US); LANANTE, Leonardo Alisasis, Philadelphia, 19103 (US); DINAN, Esmael Hejazi, Philadelphia, 19103 (US); ERKUCUK, Serhat, Philadelphia, 19103 (US)
(74) Representative: V.O.

(57) **Abstract**

An access point (AP) may communicate with one or more stations (STAs) (or wireless devices or computing devices). The AP may receive a first frame from a first station. The first frame may comprise a buffer status report (BSR) for a peer-to-peer (P2P) connection of the first STA with a second STA. The AP may send a second frame, where the second frame may indicate a first frequency allocation for use by the first STA and a second identifier of the second STA.

## Description

### CROSS-REFERENCE TO RELATED APPLICATIONS

This application claims the benefit of U.S. Provisional Application No. 63/410,315, filed on September 27, 2022. The above referenced application is hereby incorporated by reference in its entirety.

### BACKGROUND

A station (STA) may be allocated with multiple resources for data unit transmissions in time. Communications between the STA and an access point (AP) provide for resource allocation and/or transmission.

### SUMMARY

The following summary presents a simplified summary of certain features. The summary is not an extensive overview and is not intended to identify key or critical elements.

An AP may communicate with a computing device (e.g., a wireless device, a station (STA), etc.). A first frame comprising a buffer status report (BSR) for a peer-to-peer (P2P) connection of a first computing device with a second computing device may be communicated to the AP from the first computing device. A second frame, communicated from the AP to the first computing device, may indicate a sharing mode field, which may enable the AP to allocate a portion of resources to the first computing device for sending data units to a peer computing device (e.g. the second computing device). Instead of tracking all established peer computing device pairs (e.g. the first computing device and second computing device), which may require significant processing power, the AP may obtain the knowledge of the current peer computing device pairs from one or more BSRs. The AP may allocate the available subchannels to the peer STA pairs based on the BSRs. The allocated computing device can prioritize transmission of a particular traffic such as latency-sensitive P2P traffic.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1 shows example wireless communication networks.
FIG. 2 shows example devices in a communication network.
FIG. 3 shows an example format of a Medium Access Control (MAC) frame.
FIG. 4 shows an example of a Quality of Service (QoS) null frame indicating buffer status information.
FIG. 5 shows an example format of a physical layer (PHY) protocol data unit (PPDU).
FIG. 6 shows an example that comprises buffer status reporting by STAs, scheduling by an AP of uplink multi-user (MU) transmissions, and transmission of scheduled uplink transmissions by the STAs.
FIG. 7 shows an example format of a trigger frame.
FIG. 8 shows an example of a triggered TXOP sharing (TXS) procedure.
FIG. 9 shows an example of a TXS procedure.
FIG. 10 shows an example of a MU-RTS trigger frame in a TXS procedure.
FIG. 11 shows an example of tunneled direct link setup (TDLS) procedure.
FIG. 12 shows an example Frequency Division Multiple Access (FDMA)-based TXS procedure.
FIG. 13 shows an example FDMA-based TXS procedure.
FIG. 14A, FIG. 14B, FIG. 14C, FIG. 14D, FIG. 14E, FIG. 14F, and FIG. 14G show examples of a peer STA information element.
FIG. 15A, FIG. 15B, and FIG. 15C show examples of a peer STA information element.
FIG. 16A, FIG. 16B, and FIG. 16C show examples of a peer STA information element.
FIG. 17 shows an example FDMA-based TXS procedure.
FIG. 18A, FIG. 18B, FIG. 18C, and FIG. 18D show examples of a peer STA information element.
FIG. 19A and FIG. 19B show examples of FDMA-based TXS procedures.
FIG. 20A and FIG. 20B shows examples of FDMA-based TXS procedures.
FIG. 21 shows example elements of a computing device that may be used to implement any of the various devices described.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

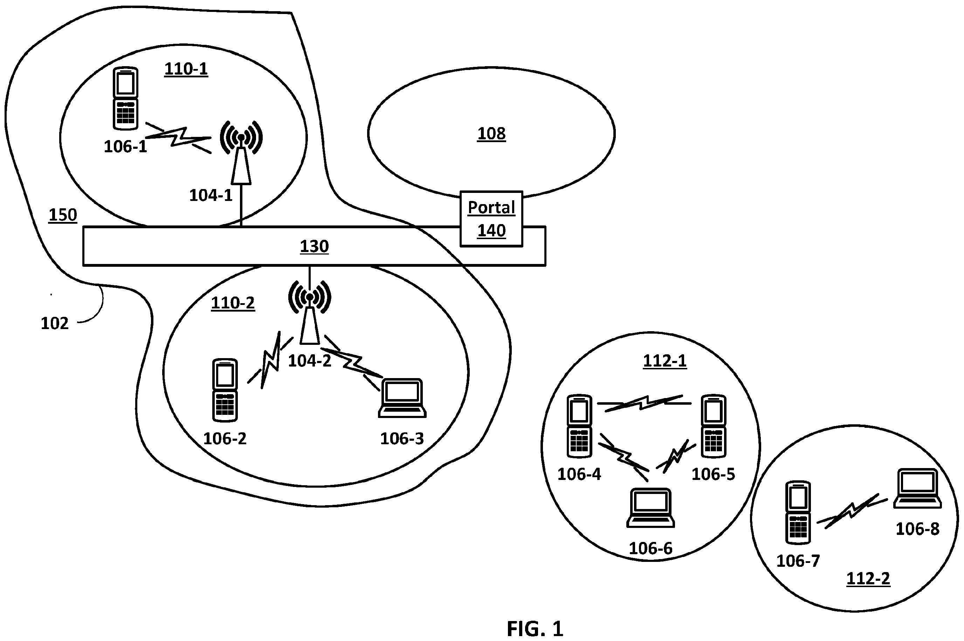

FIG. 1 shows example wireless communication networks. The example wireless communication networks may be a wireless local area network (WLAN) 102. The WLAN 102 may comprise an Institute of Electrical and Electronic Engineers (IEEE) 802.11 infrastructure network, or any other type of communication network. The WLAN 102 may comprise one or more basic service sets (BSSs) 110-1 and 110-2. BSSs 110-1 and 110-2 may each include a set of an access point (AP or AP STA) and at least one station (STA or non-AP STA). For example, BSS 110-1 includes an AP 104-1 and a STA 106-1, and BSS 110-2 includes an AP 104-2 and STAs 106-2 and 106-3. The AP and the at least one STA in a BSS may be configured to perform an association procedure to communicate with each other.

The WLAN 102 may comprise a distribution system (DS) 130. DS 130 may be configured to connect BSS 110-1 and BSS 110-2. DS 130 may enable an extended service set (ESS) 150 by being configured to connect BSS 110-1 and BSS 110-2. The ESS 150 may be a network comprising one or more Aps (e.g., Aps 104-1 and AP 104-2) that may be connected via the DS 130. The APs included in ESS 150 may have the same service set identification (SSID). WLAN 102 may be coupled to one or more external networks. For example, WLAN 102 may be connected to another network 108 (e.g., 802.X) via a portal 140. Portal 140 may function as a bridge connecting DS 130 of WLAN 102 with the other network 108.

The example wireless communication networks may also, or alternatively, comprise one or more ad-hoc networks and/or independent BSSs (IBSSs). For example, FIG. 1 shows example IBSSs, where STAs 106-4, 106-5 and 106-6 may be configured to form a first IBSS 112-1 and STAs 106-7 and 106-8 may be configured to form a second IBSS 112-2. An ad-hoc network and/or IBSS is a network that includes a plurality of STAs without a centralized communication device, such as an AP. The plurality of STAs may be configured to communicate without requiring the presence of an AP. For example, the plurality of STAs in the IBSS may communicate with each other using peer-to-peer communication (e.g., not via an AP). IBSSs do not include a centralized management entity (e.g., an AP) configured to perform a centralized management. STAs within an IBSS are managed in a distributed manner. STAs forming an IBSS may be fixed and/or mobile. The STAs (e.g., STAs 106-4, 106-5, 106-6, 106-7, 106-8) may or may not be permitted to access the DS 130 to constitute a self-contained network.

A STA may comprise one or more layers in accordance with the open systems interconnection (OSI) model. For example, STAs may comprise a medium access control (MAC) layer that may be in accordance with a defined standard (e.g., an IEEE 802.11 standard, or any other standard). A physical (PHY) layer interface for a radio medium may include the APs and the non-AP stations (STAs). The STA may comprise one or more of a computing device, a mobile terminal, a wireless device, a wireless transmit/receive unit (WTRU), user equipment (LTE), a mobile station (MS), a mobile subscriber unit, and/or a user device. For example, with respect to wireless LAN communications, a device participating in uplink multi-user, multiple input, multiple output (MU-MIMO) and/or uplink orthogonal frequency division multiple access (OFDMA) transmission may be referred to as a STA. STAs may not be limited to only participating in wireless LAN communications, and may perform other types of communications, operations, and/or procedures.

A frequency band to be used for communication may include multiple sub-bands and/or frequency channels. For example, messages (e.g., data packets, physical layer protocol data units (PPDUs)) conforming to the IEEE 802.11 standard (e.g., IEEE 802.11n, 802.11ac, 802.11ax, 802.11be, etc., standards) may be sent (e.g., transmitted) over the 2.4, 5 GHz, and/or 6 GHz bands. Each of the bands may be divided into multiple 20 MHz channels. PPDUs conforming to the IEEE 802.11 standard may be sent, for example, via a physical channel with a minimum bandwidth of 20 MHz. Larger channels may be formed through channel bonding. For example, the PPDUs may be sent via physical channels with bandwidths of 40 MHz, 80 MHz, 160 MHz, 520 MHz, or any other frequency greater than 20 MHz, by bonding together multiple 20 MHz channels.

A PPDU may be a composite structure that may comprise a PHY preamble and a payload in the form of a physical layer convergence protocol (PLCP) service data unit (PSDU). For example, the PSDU may comprise a PLCP preamble, a header, and/or one or more MAC protocol data units (MPDUs). Information indicated by the PHY preamble may be used by a receiving device to decode subsequent data in the PSDU. Preamble fields may be duplicated and sent in each of multiple component channels in a bonded channel, for example, if the PPDU is sent via the bonded channel. The PHY preamble may comprise both a legacy portion (e.g., a legacy preamble) and a non-legacy portion (e.g., a non-legacy preamble). The legacy preamble may be used for packet detection, automatic gain control and channel estimation, etc. The legacy preamble also may generally be used to maintain compatibility with legacy devices. The information provided in, and the format and coding of the non-legacy portion of the preamble may be based on the particular IEEE 802.11 protocol to be used to send the payload.

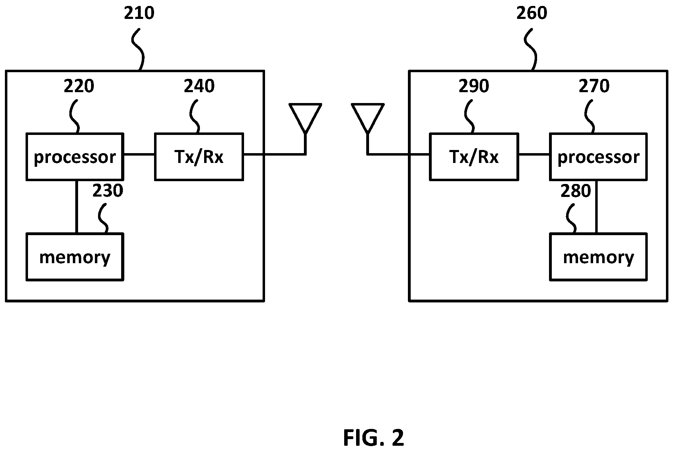

FIG. 2 shows example devices in a communication network. The communication network of FIG. 2 may comprise multiple devices (e.g., communication devices 210 and 260). The communication devices 210 and 260 may perform various functions and procedures as described herein. For example, the communication device 210 may operate as an AP (e.g., an AP STA) and the communication device 260 may operate as a STA (e.g., a non-AP STA). The communication device 210 may operate as a STA (e.g., a non-AP STA) and the communication device 260 may operate as an AP (e.g., an AP STA). Also, or alternatively, the communication device 210 and the communication device 260 may both operate as STAs (e.g., a non-AP STAs) or may both operate as APs (e.g., AP STAs).

The communication device 210 may comprise at least one processor 220, a memory 230, and/or at least one transceiver (e.g., RF unit) 240. The communication device 260 may comprise at least one processor 270, memory 280, and/or at least one transceiver (e.g., RF unit) 290. The transceivers (e.g., transceivers 240, 290) may send/receive radio signals. The transceivers may operate as a PHY layer (e.g., a PHY layer in accordance with an IEEE 802.11 protocol, a 3^{rd} generation partnership project (3GPP) protocol, etc.). The processors (e.g., processors 220, 270) may operate as a PHY layer and/or MAC layer. The processors may be operatively connected to the transceivers, respectively. The communication devices 210 and/or 260 may be a multi-link device (MLD), that is a device capable of operating over multiple links (e.g., as defined by the IEEE 802.11be standard amendment). A MLD has multiple PHY layers. The multiple PHY layers may be implemented using one or more of transceivers 240 and/or 290. Processor 220 and/or 270 may implement functions of the PHY layer, the MAC layer, and/or a logical link control (LLC) layer of the corresponding communication devices 210 and/or 260.

The processors and/or the transceivers may comprise an application specific integrated circuit (ASIC), other chipset, logic circuit, and/or data processor. The memory (e.g., memory 230, 280) may include read-only memory (ROM), random access memory (RAM), flash memory, memory card, storage medium and/or other storage unit. The procedures described herein may be executed by modules that perform various functions described herein (e.g., in accordance with instructions stored in the memory). The modules can be stored in the memory and executed by the processor. The memory may be integrated with the processor or may be external to the processor. The memory may be operatively connected to the processor. The processor may implement the functions, processes and/or methods as described herein. For example, the processor 220 may be implemented to perform operations of the AP as described herein. For example, the processor 270 may be implemented to perform operations of the STA as described herein. The memory may store instructions that, when executed by one or more processors, cause the communication device to perform methods as described herein. For example, the memory may be a non-transitory computer-readable medium comprising instructions that, when executed by the one or more processors, cause the one or more processors to perform methods and operations described herein. For example, the memory 230 may store instructions that, when executed by the processor 220, cause the processor 220 to perform operations of the AP as described herein. For example, the memory 280 may store instructions that, when executed by the processor 270, cause the processor 270 to perform operations of the STA as described herein.

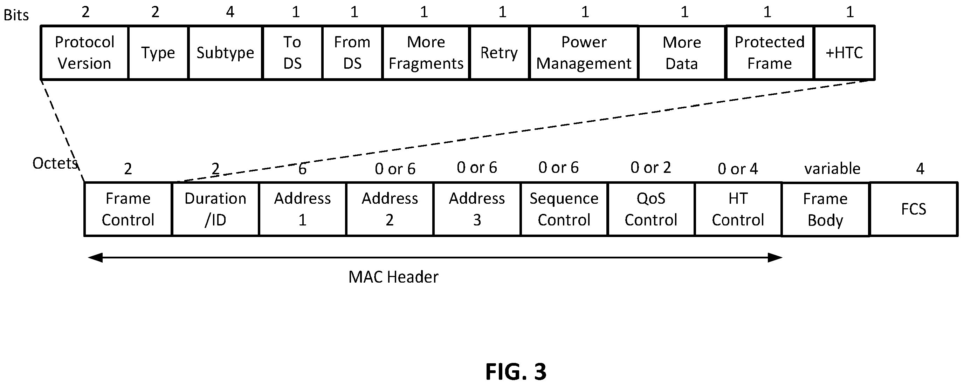

FIG. 3 shows an example format of a MAC frame. In operation, a STA may construct a subset of MAC frames for transmission and may decode a subset of received MAC frames upon validation. The particular subsets of frames that a STA may construct and/or decode may be determined by the functions supported by the STA. A STA may validate a received MAC frame using a frame check sequence (FCS) contained in the frame and may interpret certain fields from the MAC headers of all frames.

As shown in FIG. 3, a MAC frame may comprise a MAC header, a variable length frame body, and a frame check sequence (FCS). The MAC header may comprise a frame control field, an optional duration/ID field, address fields, an optional sequence control field, an optional QoS control field, and an optional high throughput (HT) control field.

The frame control field may comprise the following subfields: protocol version, type, subtype, To DS, From DS, more fragments, retry, power management, more data, protected frame, and +HTC (high throughput control). The protocol version subfield is invariant in size and placement across all revisions of the IEEE 802.11 standard. The value of the protocol version subfield may be 0 for MAC frames.

The type and subtype subfields together identify the function of the MAC frame. There are three frame types: control, data, and management. Each of the frame types has several defined subtypes. Bits within the subtype subfield may be used to indicate a specific modification of the basic data frame (subtype 0). For example, in data frames, the most significant bit (MSB) of the subtype subfield, bit 7 (B7) of the frame control field, is defined as the QoS subfield. For example, if the QoS subfield is set to 1, it may indicate a QoS subtype data frame, which is a data frame that contains a QoS control field in its MAC header. The second MSB of the subtype field, bit 6 (B6) of the frame control field, if set to 1 in data subtypes, may indicate a data frame that contain no frame body field.

The To DS subfield may indicate whether a data frame is destined to the distribution system (DS). The From DS subfield may indicate whether a data frame originates from the DS. The more fragments subfield may be set to 1 in all data or management frames that have another fragment to follow of the MAC service data unit (MSDU) or MAC management protocol data unit (MMPDU) carried by the MAC frame. The more fragments subfield may be set to 0 in all other frames in which the more fragments subfield is present.

The retry subfield may be set to 1 in any data or management frame that is a retransmission of an earlier frame. The retry subfield may be set to 0 in all other frames in which the retry subfield is present. A receiving STA may use this indication to aid in the process of eliminating duplicate frames. These rules may not apply for frames sent by a STA under a block agreement. The power management subfield may be used to indicate the power management mode of a STA.

The More Data subfield may indicate to a STA in power save (PS) mode that bufferable units (Bus) are buffered for that STA at the AP. The more data subfield may be valid in individually addressed data or management frames sent (e.g., transmitted) by an AP to a STA in PS mode. The more data subfield may be set to 1 to indicate that at least one additional buffered BU is present for the STA.

The protected frame subfield may be set to 1, for example, if the frame body field contains information that has been processed by a cryptographic encapsulation algorithm. The +HTC subfield may indicate that the MAC frame contains an HT control field.

The duration/ID field of the MAC header may indicate various contents depending on frame type and subtype and the QoS capabilities of the sending STA. For example, in control frames of the power save poll (PS-Poll) subtype, the duration/ID field may carry an association identifier (AID) of the STA that sent (e.g., transmitted) the frame in the 14 least significant bits (LSB), and the two most significant bits (MSB) may be both set to 1. In other frames sent by STAs, the duration/ID field may contain a duration value (in microseconds) which may be used by a recipient to update a network allocation vector (NAV). The NAV may be a counter that indicates to a STA an amount of time during which the STA must defer from accessing the shared medium.

There may be up to four address fields in the MAC frame format. These fields may be used to indicate the basic service set identifier (BSSID), source address (SA), destination address (DA), transmitting address (TA), and receiving address (RA). Certain frames might not contain some of the address fields. Certain address field usage may be specified by the relative position of the address field (1-4) within the MAC header, independent of the type of address present in that field. For example, the address 1 field always identifies the intended receiver(s) of the frame, and the address 2 field, where present, always identifies the transmitter of the frame.

The sequence control field may comprise two subfields, a sequence number subfield and a fragment number subfield. The sequence number subfield in data frames may indicate the sequence number of the MSDU (if not in an Aggregated MSDU (A-MSDU)) or A-MSDU. The sequence number subfield in management frames may indicate the sequence number of the frame. The fragment number subfield may indicate the number of each fragment of an MSDU or MMPDU. The fragment number may be set to 0 in the first or only fragment of an MSDU or MMPDU and may be incremented by one for each successive fragment of that MSDU or MMPDU. The fragment number may be set to 0 in a MAC protocol data unit (MPDU) containing an A-MSDU, or in an MPDU containing an MSDU or MMPDU that is not fragmented. The fragment number may remain constant in all retransmissions of the fragment.

The QoS control field may identify the traffic category (TC) or traffic stream (TS) to which the MAC frame belongs. The QoS control field may also indicate various other QoS related, A-MSDU related, and mesh-related information about the frame. This information can vary by frame type, frame subtype, and type of sending (e.g., transmitting) STA. The QoS control field is present in all data frames in which the QoS subfield of the subtype subfield is equal to 1.

The HT control field is present in QoS data, QoS null, and management frames as determined by the +HTC subfield of the frame control field. The frame body field is a variable length field that contains information specific to individual frame types and subtypes. It may comprise one or more MSDUs or MMPDUs. The minimum length of the frame body is 0 octets. The FCS field may contain a 32-bit Cyclic Redundancy Check (CRC) code. The FCS field value may be calculated over all of the fields of the MAC header and the frame body field.

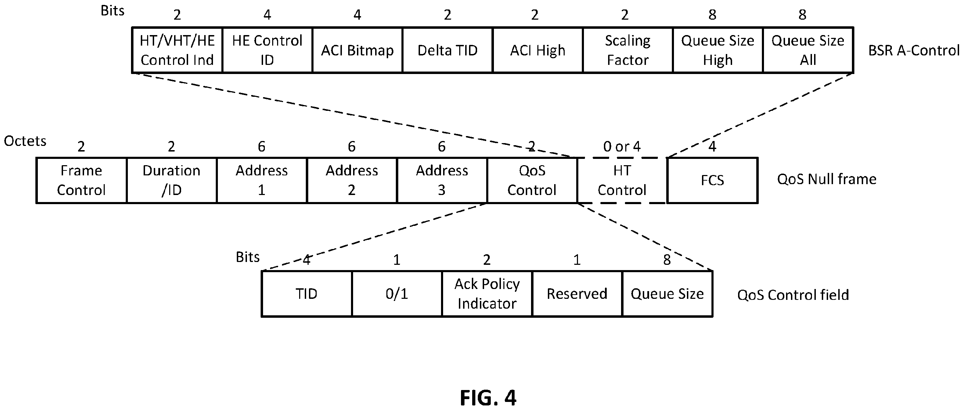

FIG. 4 shows an example of a QoS null frame indicating buffer status information. A QoS null frame refers to a QoS data frame with an empty frame body. A QoS null frame may comprise a QoS control field and an optional HT control field which may contain a buffer status report (BSR) control subfield. A QoS null frame indicating buffer status information may be sent (e.g., transmitted) by a STA to an AP.

The QoS control field may comprise a traffic identifier (TID) subfield, an ack policy indicator subfield, and a queue size subfield (or a transmission opportunity (TXOP) duration requested subfield). The TID subfield may identify the TC or TS of traffic for which a TXOP is being requested, through the setting of the TXOP duration requested or queue size subfield. The encoding of the TID subfield depends on the access policy (e.g., allowed value 0 to 7 for enhanced distributed channel access (EDCA) access policy to identify user priority for either TC or TS). The ack policy indicator subfield, together with other information, may identify the acknowledgment policy followed upon delivery of the MPDU (e.g., normal ack, implicit block ack request, no ack, block ack, etc.)

The queue size subfield may be an 8-bit field that indicates the amount of buffered traffic for a given TC or TS at the STA for transmission to the AP identified by the receiver address of the frame containing the subfield. The queue size subfield may be present in QoS null frames sent by a STA, for example, if bit 4 of the QoS control field is set to 1. The AP may use information contained in the queue size subfield to determine the TXOP (transmission opportunity) duration assigned to the STA or to determine the uplink (UL) resources assigned to the STA.

In a frame sent by or to a non-High Efficiency (non-HE) STA, the following rules may apply to the queue size value:
- The queue size value is the approximate total size, rounded up to the nearest multiple of 256 octets and expressed in units of 256 octets, of all MSDUs and A-MSDUs buffered at the STA (excluding the MSDU or A-MSDU contained in the present QoS Data frame) in the delivery queue used for MSDUs and A-MSDUs with TID values equal to the value indicated in the TID subfield of the QoS Control field;
- A queue size value of 0 is used solely to indicate the absence of any buffered traffic in the queue used for the specified TID;
- A queue size value of 254 is used for all sizes greater than 64 768 octets;
- A queue size value of 255 is used to indicate an unspecified or unknown size.

In a frame sent by an HE STA to an HE AP, the following rules may apply to the queue size value:
- The queue size value, *QS,* is the approximate total size in octets, of all MSDUs and A-MSDUs buffered at the STA (including the MSDUs or A-MSDUs contained in the same PSDU as the frame containing the queue size subfield) in the delivery queue used for MSDUs and A-MSDUs with TID values equal to the value indicated in the TID subfield of the QoS control field;
- The queue size subfield comprises a scaling factor subfield in bits B14-B15 of the QoS control field and an unscaled value, *UV*, in bits B8-B13 of the QoS control field. The scaling factor subfield provides the scaling factor, *on.*

A STA may obtain the queue size, *QS,* from a received QoS control field, which contains a scaling factor, *SF,* and an unscaled value, *UV*, as follows:
*QS =*
   16 × *UV*, if *SF* is equal to 0;
1024 + 256 × *UV*, if *SF* is equal to 1;
17408 + 2048 × *UV*, if *SF* is equal to 2;
148480 + 32768 × *UV*, if *SF* is equal to 3 and *UV* is less than 62;
> 2147328, if *SF* equal to is 3 and *UV* is equal to 62;
*Unspecified* or *Unknown,* if *SF* is equal to 3 and *UV* is equal to 63.

The TXOP duration requested subfield, which may be included instead of the queue size subfield, may indicate the duration, in units of 32 microseconds (us), that the sending STA determines it needs for its next TXOP for the specified TID. The TXOP duration requested subfield may be set to 0 to indicate that no TXOP is requested for the specified TID in the current service period (SP). The TXOP duration requested subfield may be set to a nonzero value to indicate a requested TXOP duration in the range of 32 us to 8160 us in increments of 32 us.

The HT control field may comprise a BSR control subfield which may contain buffer status information used for UL MU operation. The BSR control subfield may be formed by a control ID, an access category index (ACI) bitmap subfield, a delta TID subfield, an ACI high subfield, a scaling factor subfield, a queue size high subfield, and a queue size all subfield of the HT control field.

The ACI bitmap subfield may indicate the access categories for which buffer status is reported (e.g., B0: best effort (AC_BE), B1: background (AC_BK), B2: video (AC_VI), B3: voice (AC_VO), etc.). Each bit of the ACI bitmap subfield may be set to 1 to indicate that the buffer status of the corresponding AC is included in the queue size all subfield, and set to 0 otherwise, except that if the ACI bitmap subfield is 0 and the delta TID subfield is 3, then the buffer status of all 8 TIDs is included.

The delta TID subfield, together with the values of the ACI bitmap subfield, may indicate the number of TIDs for which the STA is reporting the buffer status. The ACI high subfield may indicate the ACI of the AC for which the BSR is indicated in the queue size high subfield. The ACI to AC mapping is defined as ACI value 0 mapping to AC_BE, ACI value 1 mapping to AC BK, ACI value 2 mapping to AC_VI, and ACI value 3 mapping to AC_VO. The scaling factor subfield may indicate the unit SF, in octets, of the queue size high and queue size all subfields.

The queue size high subfield may indicate the amount of buffered traffic, in units of SF octets, for the AC identified by the ACI high subfield, that is intended for the STA identified by the receiver address of the frame containing the BSR control subfield. The queue size all subfield may indicate the amount of buffered traffic, in units of SF octets, for all Acs identified by the ACI Bitmap subfield, that is intended for the STA identified by the receiver address of the frame containing the BSR control subfield.

The queue size values in the queue size high and queue size all subfields are the total sizes, rounded up to the nearest multiple of SF octets, of all MSDUs and A-MSDUs buffered at the STA (including the MSDUs or A-MSDUs contained in the same PSDU as the frame containing the BSR control subfield) in delivery queues used for MSDUs and A-MSDUs associated with AC(s) that are specified in the ACI high and ACI bitmap subfields, respectively.

A queue size value of 254 in the queue size high and queue size all subfields may indicate that the amount of buffered traffic is greater than 254 × SF octets. A queue size value of 255 in the queue size high and queue size all subfields may indicate that the amount of buffered traffic is an unspecified or unknown size. The queue size value of QoS data frames containing fragments may remain constant even if the amount of queued traffic changes as successive fragments are sent (e.g., transmitted).

MAC service may provide peer entities with the ability to exchange MSDUs. To support this service, a local MAC may use the underlying PHY-level service to transport the MSDUs to a peer MAC entity. Such asynchronous MSDU transport may be performed on a connectionless basis.

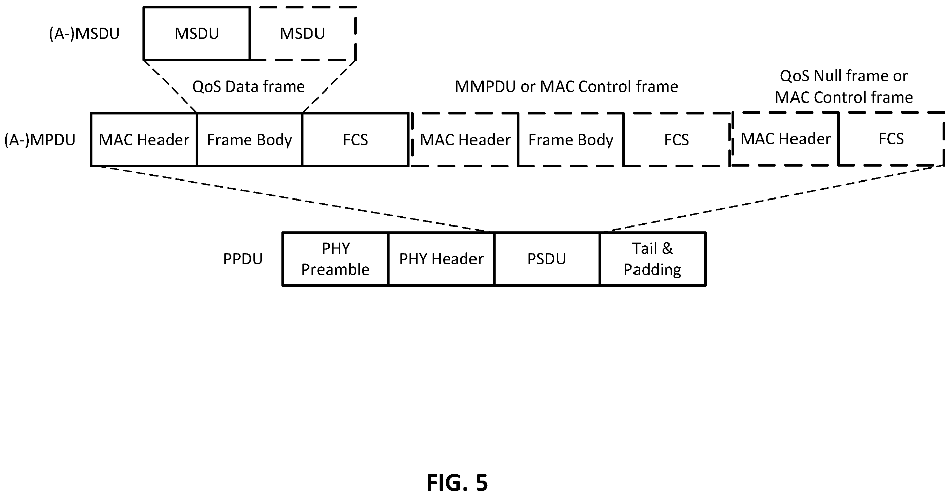

FIG. 5 shows an example format of a PPDU. As shown, the PPDU may comprise a PHY preamble, a PHY header, a PSDU, and tail and padding bits.

The PSDU may comprise one or more MPDUs, such as a QoS data frame, an MMPDU, a MAC control frame, or a QoS null frame. For an MPDU carrying a QoS data frame, the frame body of the MPDU may comprise a MSDU or an A-MSDU. By default, MSDU transport is on a best-effort basis. That is, there is no guarantee that a sent (e.g., transmitted) MSDU will be delivered successfully. The QoS facility may use a traffic identifier (TID) to specify differentiated services on a per-MSDU basis.

A STA may differentiate MSDU delivery according to designated traffic category (TC) or traffic stream (TS) of individual MSDUs. The MAC sublayer entities may determine a user priority (UP) for an MSDU based on a TID value provided with the MSDU. The QoS facility may support eight UP values. The UP values may range from 0 to 7 and may form an ordered sequence of priorities, with 1 being the lowest value, 7 the highest value, and 0 falling between 2 and 3.

An MSDU with a particular UP may belong to a traffic category with that UP. The UP may be provided with each MSDU at the medium access control service access point (MAC SAP) directly in a UP parameter. An aggregate MPDU (A-MPDU) may comprise MPDUs with different TID values.

A STA may deliver buffer status reports (BSRs) to assist an AP in allocating LTL MU resources. The STA may either implicitly deliver BSRs in the QoS control field or BSR control subfield of any frame sent (e.g., transmitted) to the AP (unsolicited BSR) or explicitly deliver BSRs in a frame sent to the AP, for example, based on (e.g., in response to) a BSRP Trigger frame (solicited BSR).

The buffer status reported in the QoS control field may comprise a queue size value for a given TID. The buffer status reported in the BSR control field may comprise an ACI bitmap, delta TID, a high priority AC, and two queue sizes. A STA may report buffer status to the AP, in the QoS control field, of sent (e.g., transmitted) QoS null frames and QoS data frames and, in the BSR control subfield (if present), of sent (e.g., transmitted) QoS null frames, QoS data frames, and management frames as defined below.

The STA may report the queue size for a given TID in the queue size subfield of the QoS control field of sent (e.g., transmitted) QoS data frames or QoS null frames; the STA may set the queue size subfield to 255 to indicate an unknown/unspecified queue size for that TID. The STA may aggregate multiple QoS data frames or QoS null frames in an A-MPDU to report the queue size for different TIDs.

The STA may report buffer status in the BSR control subfield of sent (e.g., transmitted) frames if the AP has indicated its support for receiving the BSR control subfield. A High-Efficiency (HE) STA may report the queue size for a preferred AC, indicated by the ACI high subfield, in the queue size high subfield of the BSR control subfield. The STA may set the queue size high subfield to 255 to indicate an unknown/unspecified queue size for that AC. A HE STA may report the queue size for ACs indicated by the ACI bitmap subfield in the queue size all subfield of the BSR control subfield. The STA may set the queue size all subfield to 255 to indicate an unknown/unspecified BSR for those ACs.

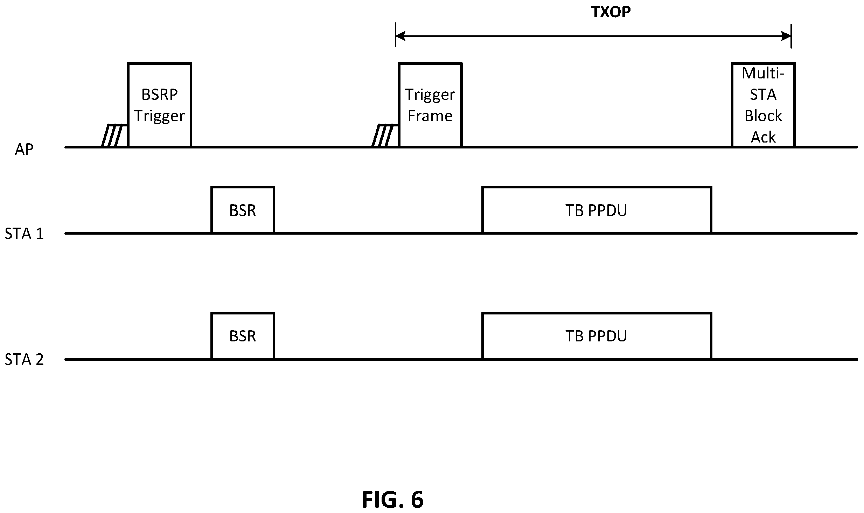

FIG. 6 shows an example that comprises buffer status reporting by STAs, scheduling by an AP of uplink multi-user (MU) transmissions, and transmission of scheduled uplink transmissions by the STAs. The AP may solicit one or more associated STAs (e.g., STA 1 and STA 2) for buffer status, for example, by sending a trigger frame (e.g., buffer status report poll (BSRP) trigger frame). Based on (e.g., upon) receiving the trigger frame (e.g., BSRP trigger frame), the one or more associated STAs (e.g., STA 1 and/or STA 2) may each generate a frame (e.g., trigger-based (TB) PPDU), for example, if the trigger frame (e.g., the BSRP trigger frame) contains, in a user information (e.g., User Info) field, the 12 LSBs of the STA's AID.

The one or more associated STAs (e.g., STA 1 and/or STA 2) may each comprise in the TB PPDU one or more QoS null frames. The one or more QoS null frames may contain one or more QoS control fields or one or more BSR control subfields.

As described herein, a QoS control field may comprise a queue size subfield for a TID for which the STA has a queue size to report to the AP. For example, STA 1 may respond to the BSRP trigger frame from the AP by sending (e.g., transmitting) an A-MPDU including multiple QoS null frames. The QoS null frames each may indicate, in its respective QoS control field, a queue size for a respective TID, for example, TID 0 and TID 2. Similarly, STA 2 may respond to the BSRP trigger frame by sending (e.g., transmitting) an MPDU including a QoS null frame, which indicates a queue size for TID 2 in its QoS control field.

A BSR control subfield may comprise a queue size all subfield indicating the queue size for the ACs, indicated by the ACI bitmap subfield, for which the STA has a queue size to report to the AP, for example, if the AP has indicated its support for receiving the BSR control subfield. The STA may set a delta TID, a scaling factor, an ACI high, and the queue size high subfields of the BSR Control subfield.

The AP may send (e.g., transmit) a trigger frame (e.g., a basic trigger frame) to allocate resources (e.g., UL MU resources) to one or more STAs (e.g., STA 1 and STA 2), for example, based on (e.g., upon) receiving the BSRs from the one or more STAs (e.g., STA 1 and STA 2). The one or more STAs may send (e.g., transmit) a TB PPDU, for example, based on (e.g., in response to) the trigger frame. For example, STA 1 may send (e.g., transmit) a TB PPDU containing QoS data frames with TID 0 and TID 2, and STA 2 may send (e.g., transmit) a TB PPDU containing one or more QoS data frame(s) with TID 2. The AP may acknowledge the sent (e.g., transmitted) TB PPDUs from the one or more STAs (e.g., STA 1 and STA 2) by sending a frame (e.g., multi-STA block ack frame).

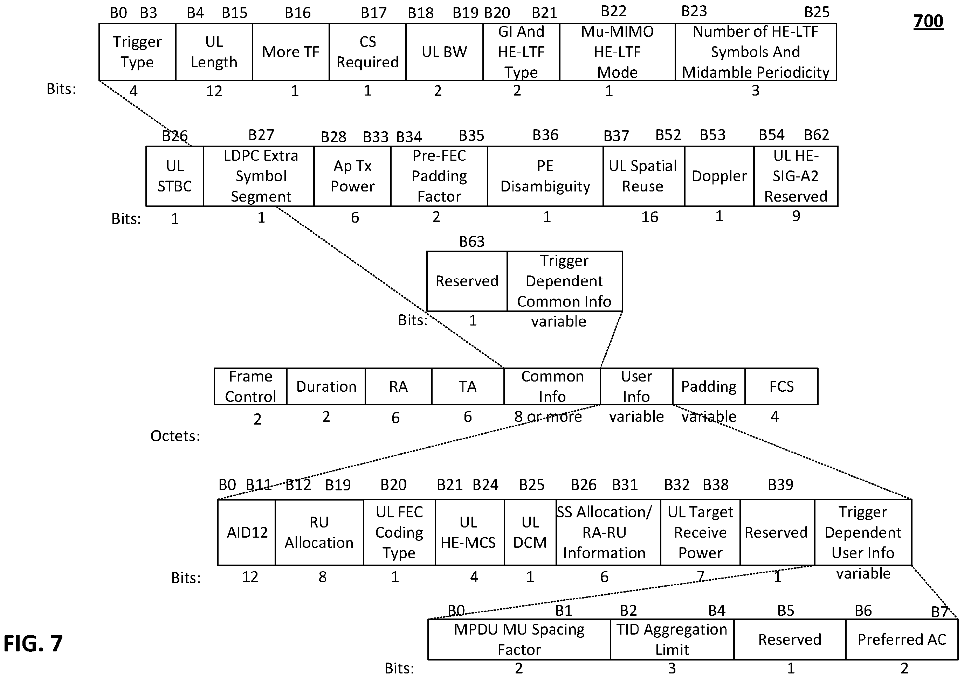

FIG. 7 shows an example format of a trigger frame. Trigger frame 700 may correspond to a basic trigger frame as defined in the existing IEEE 802.11ax standard amendment. Trigger frame 700 may be used by an AP to allocate resources for and solicit one or more TB PPDU transmissions from one or more STAs. Trigger frame 700 may also carry other information required by a responding STA to send (e.g., transmit) a TB PPDU to the AP.

As shown in FIG. 7, trigger frame 700 may comprise a Frame Control field, a Duration field, a receiver address (RA) field, a transmitter address (TA) field, a Common Info field, a User Info field, a Padding field, and an FCS field. The Frame Control field may comprise the following subfields: protocol version, type, subtype, To DS, From DS, more fragments, retry, power management, more data, protected frame, and +HTC.

The Duration field may indicate various contents depending on frame type and subtype and the QoS capabilities of the sending STA. For example, in control frames of the power save poll (PS-Poll) subtype, the Duration field may carry an association identifier (AID) of the STA that sent (e.g., transmitted) the frame in the 14 least significant bits (LSB), and the 2 most significant bits (MSB) may both be set to 1. In other frames sent by STAs, the Duration field may contain a duration value (in microseconds) which is used by a recipient to update a network allocation vector (NAV).

The RA field is the address of the STA that is intended to receive the incoming transmission from the transmitting station. The TA field is the address of the STA sending (e.g., transmitting) trigger frame 700, for example, if trigger frame 700 is addressed to STAs that belong to a single BSS. The TA field is the sent (e.g., transmitted) BSSID, for example, if the trigger frame 700 is addressed to STAs from at least two different BSSs of the multiple BSSID set.

The Common Info field may specify a trigger frame type of trigger frame 700, a transmit power of trigger frame 700 in dBm, and several key parameters of a TB PPDU that is sent (e.g., transmitted) by a STA, for example, based on (e.g., in response to) trigger frame 700. The trigger frame type of a trigger frame used by an AP to receive QoS data using UL MU operation is referred to as a basic trigger frame.

The User Info field may contain a User Info field per STA addressed in trigger frame 700. The per STA User Info field may comprise, among others, an AID subfield, an RU Allocation subfield, a Spatial Stream (SS) Allocation subfield, an MCS subfield to be used by a STA in a TB PPDU sent (e.g., transmitted), for example, based on (e.g., in response to) trigger frame 700, and a Trigger Dependent User Info subfield. The Trigger Dependent User Info subfield can be used by an AP to specify a preferred access category (AC) per STA. The preferred AC may set the minimum priority AC traffic that can be sent by a participating STA. The AP may determine the list of participating STAs, along with the BW, MCS, RU allocation, SS allocation, Tx power, preferred AC, and maximum duration of the TB PPDU per participating STA.

The Padding field is optionally present in trigger frame 700 to extend the frame length to give recipient STAs enough time to prepare a response for transmission one short interframe spacing (SIFS), for example, after the frame is received. The Padding field, if present, is at least two octets in length and may be set to all 1s. The FCS field may be used by a STA to validate a received frame and to interpret certain fields from the MAC headers of a frame.

A triggered TXOP sharing procedure may allow an AP to allocate a portion of the time within an obtained TXOP to a STA for transmitting one or more non-trigger-based (non-TB) PPDUs. Such triggered TXOP sharing may be used in various standards, such as in IEEE 802.11 standards. For the triggered TXOP sharing procedure, the AP may transmit a multi-user request-to-send (MU-RTS) trigger frame with a triggered TXOP sharing mode subfield set to a non-zero value. The MU-RTS trigger frame is a trigger frame for triggering Clear to Send (CTS) frame(s) from multiple users.

A MU-RTS TXS (triggered TXOP sharing) trigger (MRTT) frame is a MU-RTS trigger frame with a triggered TXOP sharing mode subfield set to a non-zero value (e.g., 1 or 2).

The STA may transmit the one or more non-TB PPDUs to the AP during the portion of the allocated time. A triggered TXOP sharing mode subfield in a MU-RTS TXS trigger frame may be set to 1.

The STA may transmit the one or more non-TB PPDUs to the AP or a peer STA during the portion of the allocated time. The peer STA may be a STA with a connection for peer-to-peer (P2P) communication or direct communication with the STA. A triggered TXOP sharing mode subfield in a MU-RTS TXS trigger frame may be set to 2.

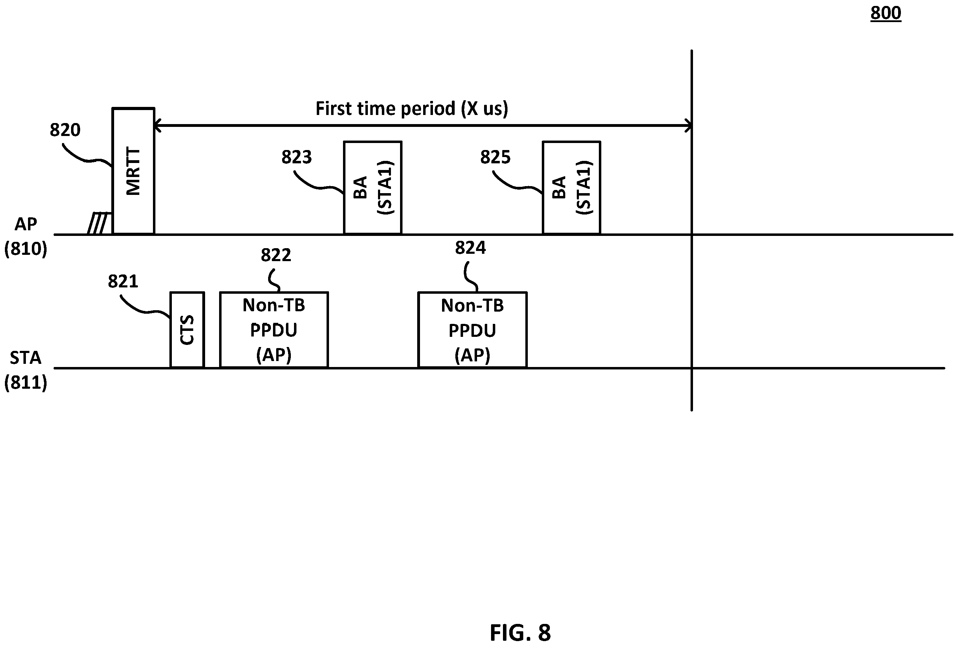

FIG. 8 shows an example 800 of a triggered TXOP sharing (TXS) procedure. The triggered TXOP sharing mode may be 1 (Mode=1). An AP 810 as shown in FIG. 8 may send (e.g. transmit) a MU-RTS TXS trigger (MRTT) frame 820 to a STA 811. MRTT frame 820 may allocate a portion of an obtained TXOP to STA 811 and may indicate a triggered TXOP sharing mode equal to 1. STA 811 receiving MRTT frame 820 may use the allocated time duration to transmit one or more non-TB PPDUs 822, 824 to AP 810.

MRTT frame 820 may comprise a triggered TXOP sharing mode subfield and/or a first time period. The first time period may indicate a portion of a time allocated by AP 810 within an obtained TXOP. The first time period may be indicated by a subfield in MRTT frame 820. The first time period may be set to a value of X microseconds (us). The triggered TXOP sharing mode subfield may be set to 1. The triggered TXOP sharing mode subfield set to 1 may indicate that STA 811 may transmit one or more non-TB PPDUs to AP 810 during the first time period. The one or more non-TB PPDUs may comprise a data frame, a control frame, a management frame, or an action frame.

MRTT frame 820 as shown in FIG. 8 may define a first time period of X us. STA 811 may send (e.g. transmit) non-TB PPDUs 822, 824 comprising one or more data frame to AP 810 during the first time period, preceded by a CTS frame 821. AP 810 may send (e.g. transmit) one or more Block Ack (BA) frames 823, 825 based on (e.g. in response to) the one or more data frames contained in non-TB PPDUs 822, 824 received from STA 811.

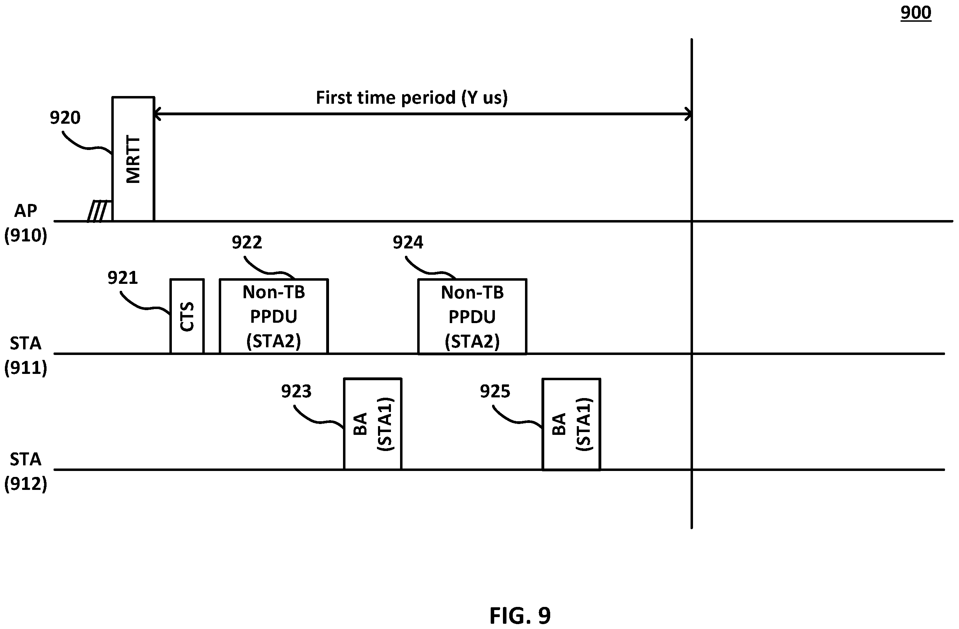

FIG. 9 shows an example 900 of a TXS procedure. The triggered TXOP sharing mode may be 2 (Mode=2). An AP 910 as shown in FIG. 9 may send (e.g. transmit) an MRTT frame 920 to a STA 911. MRTT frame 920 may allocate a portion of an obtained TXOP to STA 911 and may indicate a triggered TXOP sharing mode equal to 2. STA1 911 receiving MRTT 920 may use the allocated time duration to send (e.g. transmit) one or more non-TB PPDUs 922, 924 to STA2 912.

MRTT frame 920 may comprise a triggered TXOP sharing mode subfield and/or a first time period. The first time period may indicate a portion of a time allocated by AP 910 within an obtained TXOP. The first time period may be indicated by a subfield in MRTT frame 920. The first time period may be set to a value of Y us. The triggered TXOP sharing mode subfield may be set to 2. The triggered TXOP sharing mode subfield set to 2 may indicate that STA 911 may send (e.g. transmit) one or more non-TB PPDUs to AP 910 or to a peer STA during the first time period. The peer STA may be a STA with a connection for P2P communication or direct communication with STA 911. The one or more non-TB PPDUs may comprise a data frame, a control frame, a management frame, or an action frame.

MRTT frame 920 as shown in FIG. 9 may define a first time period of Y us. STA 911 may send (e.g. transmit) non-TB PPDUs 922, 924 comprising one or more data frame to STA 912 during the first time period, preceded by a CTS frame 921. STA 912 may send (e.g. transmit) one or more Block Ack (BA) frames 923, 925 based on (e.g. in response to) the one or more data frames contained in non-TB PPDUs 922, 924 received from the STA 911.

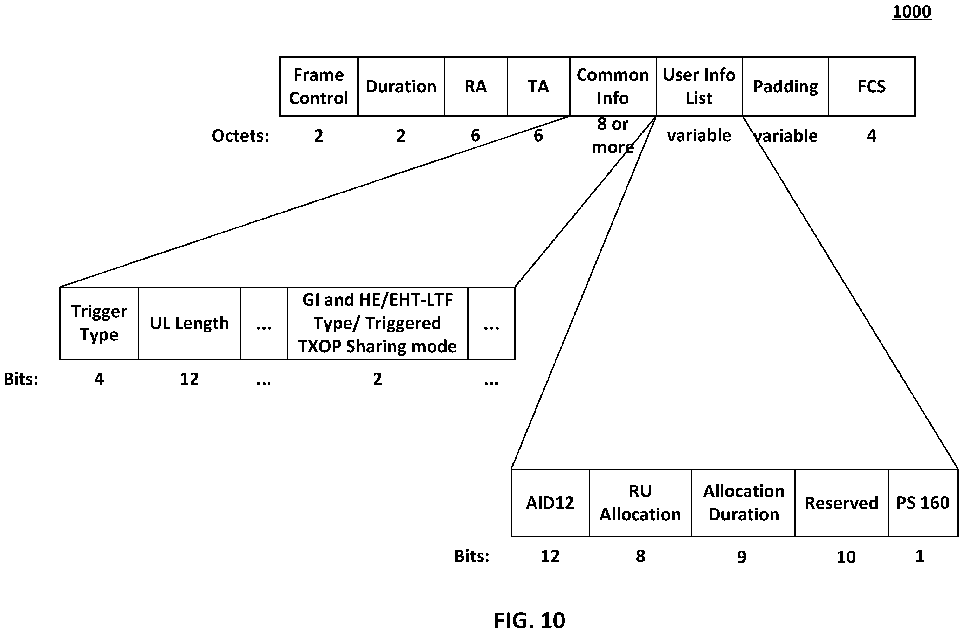

FIG. 10 is an example of n MU-RTS trigger frame in a TXS procedure. The MU-RTS trigger frame may comprise a frame control field, a duration field, a receiver address (RA) field, a transmitter address (TA) field, a common info field, a user info list field, a padding field, and/or frame check sequence (FCS) field. The common info field may be a high-efficiency (HE) variant common info field or an extremely high throughput (EHT) variant common info field.

An EHT variant common info field may comprise one or more of the following subfields: trigger type, UL length Duration, more TF, CS required, UL BW, GI and HE/EHT-LTF Type/Triggered TXOP sharing mode, number of HE/EHT-LTF symbols, LDPC extra symbol segment, AP Tx Power, Pre-FEC padding factor, PE disambiguity, UL spatial reuse, HE/EHT P 160, special user info field flag, EHT reserved, reserved, or trigger dependent common info. The trigger type subfield may indicate a MU-RTS trigger frame. The GI and HE/EHT-LTF Type/Triggered TXOP sharing mode subfield may include a triggered TXOP sharing mode subfield (e.g., if the trigger type subfield indicates a MU-RTS trigger frame).

The triggered TXOP sharing mode subfield may be set to a non-zero value (e.g., 1 or 2). The triggered TXOP sharing mode subfield may indicate that a STA indicated by an AID subfield (of the user info list field) of the MU-RTS trigger frame may send (e.g. transmit) one or more non-TB PPDUs to the AP during the time indicated by the allocation duration subfield. The triggered TXOP sharing mode subfield may be set to 1 in this case.

The triggered TXOP sharing mode subfield may indicate that a STA indicated by an AID subfield of the MU-RTS trigger frame may send (e.g. transmit) one or more non-TB PPDUs to the AP or to a peer STA during the time indicated by the allocation duration subfield. The peer STA may be a STA with a connection for P2P communication or direct communication with the STA. The triggered TXOP sharing mode subfield may be set to 2 in this case.

An EHT variant user info field may comprise one or more of the following subfields: AID, RU allocation, allocation duration, reserved, and/or PS. The AID subfield of the MU-RTS trigger frame may indicate an association identifier (AID) of a STA that may use a time indicated by an allocation duration subfield of the MU-RTS trigger frame. The RU allocation subfield of the MU-RTS trigger frame may indicate the location and size of the RU allocated to a STA indicated by an AID subfield, which is used together with the PS subfield. The allocation duration subfield may include an allocation duration subfield (e.g., when the triggered TXOP sharing mode subfield is set to a non-zero value). The allocation duration subfield may indicate a time allocated by an AP sending (e.g. transmitting) the MU-RTS trigger frame. The allocated time may be a portion of a TXOP obtained by the AP. The allocation duration subfield may indicate a first time period.

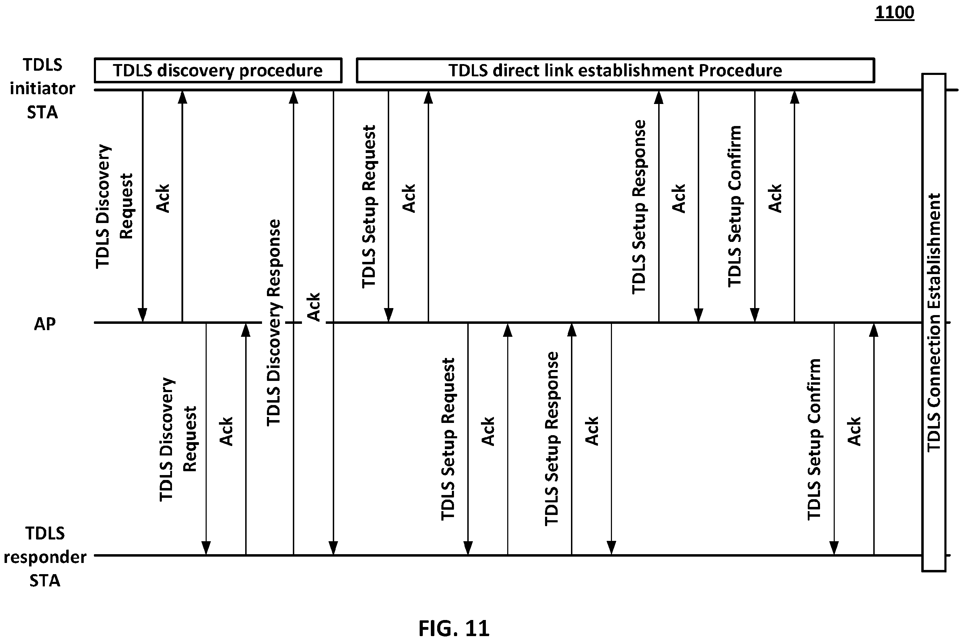

FIG. 11 shows an example of tunneled direct link setup (TDLS). Example TDLS procedure 1100 may be used a TDLS initiator STA and a TDLS responder STA, to establish a direct connection, called TDLS connection, between them.

As shown in FIG. 11, TDLS procedure 1100 may include a TDLS discovery procedure, followed by a TDLS direct link establishment procedure. The TDLS discovery procedure may include the TDLS initiator STA sending a TDLS Discovery Request frame to an AP. The AP may be an AP with which the TDLS initiator STA is associated. A receiver address (RA) of the TDLS Discovery Request frame may be set to the BSSID of the BSS of the TDLS initiator STA. The TDLS Discovery Request frame may be encapsulated in a data frame and may request TDLS capable STAs within the BSS to respond with a TDLS Discovery Response frame.

The AP acknowledges the TDLS Discovery Request frame from the TDLS initiator STA by sending an acknowledgment frame to the TDLS initiator STA. The AP then sends the TDLS Discovery Request frame to the BSS. A STA of the BSS may acknowledge the TDLS Discovery Request to the AP based on (e.g. upon) matching the BSSID contained therein to its BSS. The STA may then send a TDLS Discovery Response frame directly to the TDLS initiator STA, becoming a TDLS responder STA. The TDLS Discovery Response frame may indicate capabilities of the TDLS responder STA. The TDLS initiator STA may acknowledge the TDLS Discovery Response frame to the TDLS responder STA.

The TDLS initiator STA may send a TDLS Setup Request frame to the TDLS responder STA in the TDLS direct establishment procedure. The TDLS Setup Request frame may be sent via the AP and may specify the MAC address of the TDLS responder STA to which the frame is transmitted. The TDLS Setup Request frame may specify proposed service parameters for the TDLS setup. The AP may acknowledge the TDLS Setup Request frame to the TDLS initiator STA and send the TDLS Setup Request frame to the TDLS responder STA. The TDLS responder STA may acknowledge the TDLS Setup Request frame to the AP.

Based on (e.g. upon) receipt of a TDLS Setup Request frame, the following options (a)-(e) exist at the TDLS responder STA:
a) The TDLS responder STA may accept the TDLS Setup Request frame, in which case the TDLS responder STA may respond with a TDLS Setup Response frame with status code SUCCESS.
b) The TDLS responder STA may decline the TDLS Setup Request frame, in which case the TDLS responder STA may respond with a TDLS Setup Response frame with status code REQUEST_DECLINED. A TDLS Setup Request frame may be declined if the BSSID in the received Link Identifier does not match the BSSID of the BSS of which the TDLS responder STA is a member.
c) The TDLS Setup Request frame may be received after sending a TDLS Setup Request frame and before receiving the corresponding TDLS Setup Response frame, and the source address of the received TDLS Setup Request frame is higher than the MAC address of the TDLS responder STA, in which case the TDLS responder STA may discard the TDLS Setup Request frame and may send no TDLS Setup Response frame.
d) The TDLS Setup Request frame may be received after sending a TDLS Setup Request frame and before receiving the corresponding TDLS Setup Response frame, and the source address of the received TDLS Setup Request frame is lower than the MAC address of the TDLS responder STA, in which case the TDLS responder STA may terminate the TDLS setup that it initiated and may send a response according to either item a) or item b) above.
e) The TDLS responder STA may tear down the existing TDLS direct link and may respond with a TDLS Setup Response frame, if the TDLS Setup Request frame is received from a STA with which a currently active TDLS session exists. The tearing down response is the same response as if a TDLS Teardown frame is received.

Assuming that the TDLS responder STA responds with a TDLS Setup Response frame to the TDLS initiator, the TDLS Setup Response frame may be sent via the AP and may specify the MAC address of the TDLS initiator STA to which the frame is sent (e.g. transmitted). The TDLS Setup Response frame may specify proposed service parameters for the TDLS setup if the TDLS Setup Request frame is accepted. The AP may acknowledge the TDLS setup response frame to the TDLS responder STA and send the TDLS setup response frame to the TDLS initiator STA. The TDLS initiator STA may acknowledge the TDLS setup response frame to the AP.

The TDLS initiator STA may terminate the TDLS setup procedure and discard the TDLS Setup Response frame if no TDLS Setup Response frame is received within dot11TDLSResponseTimeout, or if a TDLS Setup Response frame is received with a status code not equal to SUCCESS. Otherwise, the TDLS initiator STA may send a TDLS Setup Confirm frame to the TDLS responder STA to confirm the receipt of the TDLS Setup Response frame. The TDLS setup confirm frame may be sent via the AP. The AP may acknowledge the TDLS setup confirm frame to the TDLS initiator STA and may send the TDLS setup confirm frame to the TDLS responder STA. The TDLS responder STA may acknowledge the TDLS setup confirm frame to the AP. The sending of the TDLS setup confirm frame by the TDLS initiator STA and the acknowledgment of the frame by the TDLS responder STA may terminate the TDLS establishment procedure and indicate establishment of a TDLS connection between the TDLS initiator STA and the TDLS responder STA.

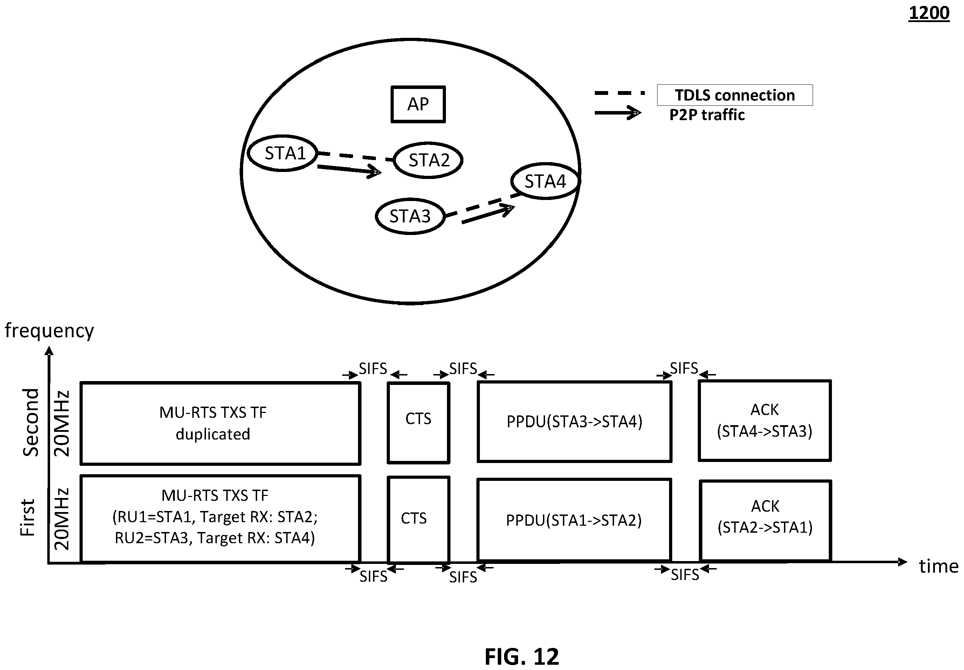

FIG. 12 shows an example 1200 of a Frequency Division Multiple Access (FDMA)-based TXS procedure. The example FDMA-based TXS procedure 1200 is described with reference to an example BSS comprising an AP and a plurality of STAs, STA1, STA2, STA3, and STA4. In an example, STA1 and STA2 may have a TDLS connection established between them. Similarly, a TDLS connection may be established between STA3 and STA4.

The AP may send (e.g. transmit) a MU-RTS TXS trigger frame to share a time portion of an obtained TXOP with multiple TDLS STA pairs simultaneously. The MU-RTS TXS trigger frame may allocate different channels/subchannels (e.g., RU1, RU2, etc.) to the multiple TDLS STA pairs so that simultaneous peer-to-peer exchanges may take place during the allocated time portion of the TXOP. As shown in FIG. 12, the MU-RTS may allocate RU1 (corresponding to a first, e.g., 20 MHz, subchannel) to TDLS STA pairs (STA1, STA2) and RU2 (corresponding to a second, e.g., 20 MHz, subchannel) to TDLS STA pairs (STA3, STA4). Specifically, the MU-RTS TXS trigger frame may allocate RU1 to STA1 and may specify STA2 as a target receiver for a transmission from STA1 during the TXOP. Similarly, the MU-RTS TXS trigger frame may allocate RU2 to STA3 and may specify STA4 as a target receiver for a transmission from STA3 during the TXOP.

The MU-RTS TXS trigger frame may be sent (e.g. transmitted) simultaneously on multiple or all subchannels of the FDMA system. As shown in FIG. 12, the AP may send (e.g. transmit) the MU-RTS TXS trigger frame on both the first and the second subchannels. STA1 and STA3 may tune their respective transmitters to the first subchannel and to the second subchannel respectively upon receiving the MU-RTS TXS trigger frame. STA2 and STA4 may similarly tune their respective receivers to the first subchannel and to the second subchannel respectively.

STA1 may send (e.g. transmit) a CTS frame (e.g., one SIFS after the MU-RTS TXS trigger frame), followed by a PPDU to STA2 (e.g., one SIFS after the CTS frame) on the first subchannel. STA2 may respond to the PPDU from STA1 by sending (e.g. transmitting) an ACK frame to STA1 on the first subchannel (e.g., one SIFS after the PPDU). STA3 may similarly send (e.g. transmit) a CTS frame (e.g., one SIFS after the MU-RTS TXS trigger frame), followed by a PPDU to STA4 (e.g., one SIFS after the CTS frame) on the second subchannel. STA4 may respond to the PPDU from STA3 by sending (e.g. transmitting) an ACK frame to STA3 on the second subchannel (e.g., one SIFS after the PPDU).

The AP may use different approaches to allocate available subchannels to STA pairs in the example FDMA-based TXS procedure 1200. The AP may allocate the available subchannels to STA pairs according to a pre-determined (e.g., round-robin) schedule. The AP may allocate STA pairs (STA1, STA2) and (STA3, STA4) during a first TXOP, STA pairs (STA2, STA3) and (STA4, STA1) during a subsequent second TXOP, STA pairs (STA1, STA3) and (STA2, STA4) during a subsequent third TXOP, etc. The pre-determined scheduled may be designed such that all possible STA pairs are allocated equally over time. This approach h may be inefficient as some allocated STA pairs may not be TDLS STA pairs. As such, absent an allocated non-TDLS STA pair having an established non-TDLS P2P connection (e.g., a Wi-Fi direct connection), the allocated STA pair may be unable to utilize the allocated TXOP time for P2P communication. The allocated TXOP resource may thus be wasted.

The AP may use knowledge of established TDLS connections in allocating the available subchannels to STA pairs. The AP may gain knowledge of established TDLS connections based on TDLS establishment frames (e.g., TDLS Setup Confirm frames) sent through the AP. The AP may allocate the available subchannels to known TDLS STA pairs based on this information. In FIG. 12, the AP may allocate the available subchannels to TDLS STA pairs (STA1, STA2) and (STA3, STA4). This approach may improve resource utilization as TDLS STA pairs are likely to have traffic available for transmission during the allocated TXOP time. This approach may require significant processing at the AP as the AP must track all established TDLS connections in the BSS. The AP may not always have up-to-date TDLS connection information at the time of allocation of TXOP resources. A TDLS connection may become stale without being torn down immediately by the corresponding STA pair. The AP may allocate the STA pair during an upcoming TXOP based on the incorrect assumption that the STA pair has P2P traffic to communicate. The allocated TXOP resource may thus be wasted.

Examples herein may provide an enhanced approach for TXOP resource allocation in an FDMA-based TXS procedure. Examples enable TXOP resource allocation to be made based on fresh P2P (e.g., TDLS, Wi-Fi direct, etc.) connection information. Real-time P2P (e.g., TDLS, Wi-Fi direct, etc.) connection information sharing with the AP may be used. The real-time TDLS connection information sharing may be enabled by existing or new types of data, control, or action frames. Embodiments enable TXOP resource allocation to be made based on current P2P (e.g., TDLS, Wi-Fi direct, etc.) STA buffer status information. P2P STA pairs allocated in a given TXOP are guaranteed to have P2P traffic to communicate during the allocated TXOP time. Resource utilization during the allocated TXOP time is thus enhanced. A STA having multiple P2P connections with different STAs may be allowed to choose the target STA for an allocated TXOP resource. The allocated STA may thus be able to prioritize the transmission of a particular (e.g., latency-sensitive) P2P traffic.

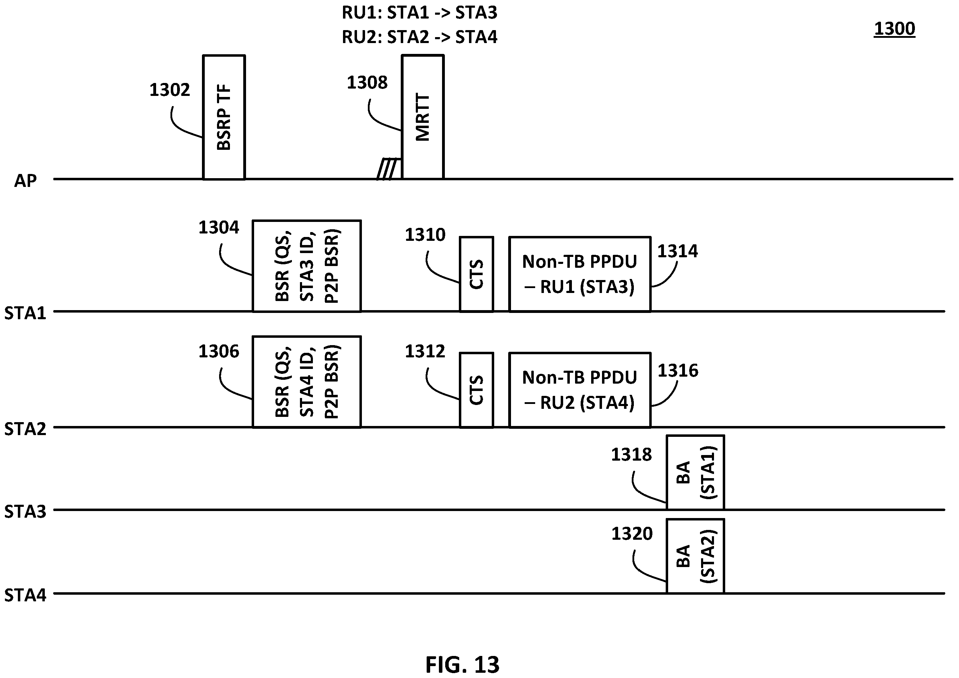

FIG. 13 shows an example 1300 of an FDMA-based TXS procedure. Example 1300 is provided for the purpose of illustration only and is not limiting of embodiments. Example 1300 shown in FIG. 13 includes an AP and a plurality of computing devices (e.g., wireless devices, STAs, etc.), STA1, STA2, STA3, and STA4. The plurality of STAs, STA1, STA2, STA3, and STA4, may be associated with the AP. The AP and the plurality of STAs may support FDMA mode according to which the AP and the STAs may operate on multiple frequency subchannels (e.g., 20 MHz subchannels).

The AP may obtain a TXOP. The AP may send (e.g. transmit) a BSRP trigger frame 1302 before or after obtaining the TXOP. BSRP trigger frame 1302 may solicit STA1 and STA2 for P2P BSRs. BSRP trigger frame 1302 may include an indication that P2P BSRs are solicited, that is, BSRs for established P2P connections of STA1 and STA2.

STA 1 and STA 2 may generate and send (e.g. transmit) TB PPDUs 1304 and 1306 respectively upon receiving BSRP trigger frame 1302. TB PPDUs 1304 and 1306 may each include one or more P2P BSRs from STA1 and STA2 respectively. A P2P BSR may include a queue size for a P2P connection of the sending (e.g. transmitting) STA. TB PPDUs 1304 and 1306 may each also include an identifier/address of the peer STA of the P2P connection. The identifier/address of the peer STA may include an AID of the peer STA, an identifier of the P2P connection with the peer STA, an index associated with the peer STA (e.g., order of P2P connection of the peer STA with the STA), or an address (e.g., MAC address or N LSBs of MAC address) of the peer STA. The P2P BSR may optionally further include an indication that the BSR is a P2P BSR.

A STA (e.g., STA1 or STA2) having multiple P2P connections with buffered traffic may select the P2P connection to signal based on (e.g. in response to) BSRP trigger frame 1302 or may adopt an order in signaling more than one P2P connection based on (e.g. in response to) BSRP trigger frame. As such, the STA may signal its preference for particular P2P connection(s) being allocated in the upcoming TXOP.

STA1 in example 1300 may include a P2P BSR for STA3 in TB PPDU 1304. The P2P BSR for STA3 may include a queue size for buffered P2P traffic from STA1 to STA3. STA2 may similarly include a P2P BSR for STA4 in TB PPDU 1306. The P2P BSR for STA4 may include a queue size for buffered P2P traffic from STA2 to STA4.

TB PPDUs 1304 and 1306 may each include one or more QoS data/null frames. The one or more QoS data/null frames may include one or more QoS control fields and/or one or more HT control fields. P2P BSRs may be included in QoS control and/or HT control fields of QoS data/null frames. A QoS control field as described above with respect to FIG. 4 may include a traffic identifier (TID) subfield, an ack policy indicator subfield, and a queue size (QS) subfield (or a TXOP duration requested subfield). An HT control field may include a BSR control subfield formed from an access category index (ACI) bitmap subfield, a delta TID subfield, an ACI high subfield, a scaling factor subfield, a queue size high subfield, and a queue size all subfield of the HT control field. The QoS control and/or HT control field may be modified to further include an identifier/address of the peer STA associated with the signaled P2P BSR.

The AP may send (e.g. transmit) a MRTT frame 1308 to STA1 and STA2 based on receiving TB PPDU 1304 and 1306 from STA1 and STA2. MRTT frame 1308 may indicate a first frequency allocation (e.g., RU1) for use by STA1 during an allocated time of the TXOP. The first frequency allocation may correspond to a first subchannel of the FDMA system. MRTT frame 1308 may additionally include an identifier/address of STA3 as a target STA for a transmission from STA1 during the allocated time of the TXOP via the first frequency allocation. The identifier/address of STA3 may include an AID of STA3, an identifier of the P2P connection of STA1 with STA3, an index associated with STA3, or an address (e.g., MAC address) of STA3. MRTT frame 1308 may similarly indicate a second frequency allocation (e.g., RU2) for use by STA2 during the allocated time of the TXOP and may include an identifier/address of STA4 as a target STA for a transmission from STA2 during the allocated time of the TXOP via the second frequency allocation. The second frequency allocation may correspond to a second subchannel of the FDMA system. The identifier/address of STA4 may include an AID of STA4, an identifier of the P2P connection of STA2 with STA4, an index associated with STA4 (e.g., order of P2P connection of the peer STA with the STA), or an address (e.g., MAC address or N LSBs of MAC address) of STA4. MRTT frame 1308 may further include a TXS mode for the TXOP. The TXS mode may indicate that STA1/STA2 may send (e.g. transmit) to the AP or to another STA during the allocated time of the TXOP (e.g., TXS mode 2 such as described in one or more IEEE 802.11 standards). MRTT frame 1308 may be sent (e.g. transmitted) simultaneously on the first frequency subchannel and on the second frequency subchannel of the FDMA system.

STA 1 may send (e.g. transmit) a CTS frame 1310 based on (e.g. in response to) MRTT frame 1308 (e.g., one SIFS after MRTT trigger frame 1308), followed by a non-TB PPDU 1314 to STA3 on the first subchannel. STA3 may respond to non-TB PPDU 1314 from STA1 by sending (e.g. transmitting) a BA frame 1318 to STA1 on the first subchannel. STA2 may similarly send (e.g. transmit) a CTS frame 1312 (e.g., one SIFS after MRTT trigger frame 1308), followed by a non-TB PPDU 1316 to STA4 on the second subchannel. STA4 may respond to non-TB PPDU 1316 from STA2 by sending (e.g. transmitting) a BA frame 1320 to STA2 on the second subchannel.

The P2P BSR (e.g., BSR for the peer connection of STA1 with STA3) may be provided in a QoS control field or an HT control field of the frame signaling the P2P BSR (e.g., QoS data/null frame in TB PPDU 1304). The identifier/address of the peer STA (e.g., identifier/address of STA3) may be provided in the HT control field of the frame signaling the P2P B SR.

The P2P BSR may be provided in the QoS control field, and the identifier/address of the peer STA may be provided in the HT control field of the frame (e.g., QoS data/null frame) signaling the P2P BSR. The TID subfield in the QoS control field may indicate a TID associated with P2P traffic to the peer STA, and the queue size subfield may indicate the number of BUs buffered for the P2P traffic to the peer STA. The HT control field may not include the BSR control subfield described above if the P2P BSR is provided in the QoS control field. Instead, the HT control field may include peer STA information to signal peer STA information to the AP.

The frame signaling the P2P BSR may include an A-MPDU. Each MPDU of the A-MPDU may have a respective QoS Control field. The A-MPDU may include one or more HT control fields. Each respective QoS Control field may include a P2P BSR for a respective peer STA. The one or more HT control fields may include the identifiers/addresses of the peer STAs.

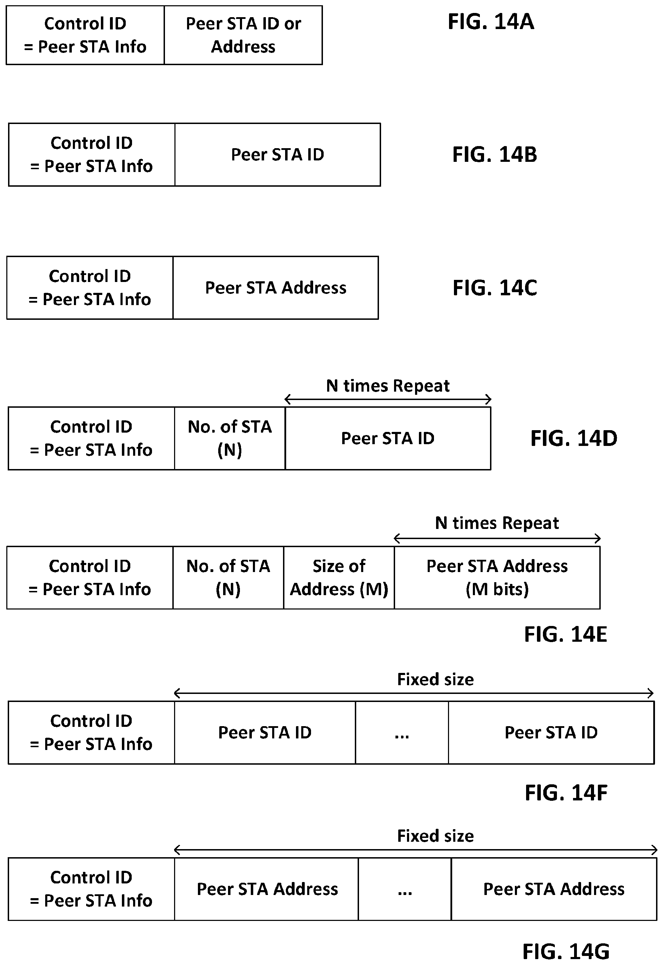

FIG. 14A, FIG. 14B, FIG. 14C, FIG. 14D, FIG. 14E, FIG. 14F, and FIG. 14G illustrate examples of peer STA information. The peer STA information may be used by a STA to signal peer STA information to an AP. The peer STA information may be included in the HT control field of a QoS data/null frame. The peer STA information may include a Control ID subfield to indicate presence of peer STA information in the HT control field. The peer STA information may additionally include one or subfields to signal the identifier/address of one or more peer STAs.

The peer STA information as shown in FIG. 14A, FIG. 14B, and FIG. 14C may signal a single peer STA identifier/address. The peer STA information as shown in FIG. 14D, FIG. 14E, FIG. 14F, and FIG. 14G may signal more than one peer STA identifier/address. The peer STA information as shown in FIG. 14D and FIG. 14E may include a subfield indicating the number of peer STAs whose identifiers/addresses are being signaled. The peer STA information as shown in FIG. 14E may include a subfield indicating the size of a peer STA address (e.g., 8, 12, 16, or 24 bits) where peer STA addresses (e.g., MAC addresses) are signaled. The peer STA information as shown in FIG. 14F and FIG. 14G may include a fixed size subfield for signaling a fixed number of peer STA identifiers/addresses. The STA may use a predetermined bit sequence (e.g., all bits set to 1) to indicate an invalid peer STA identifier/address.

Both the P2P BSR and the identifier/address of the peer STA may be provided in the HT control field of the frame signaling the P2P BSR. The HT control field may include peer STA information to signal peer STA information as well as BSR information to the AP.

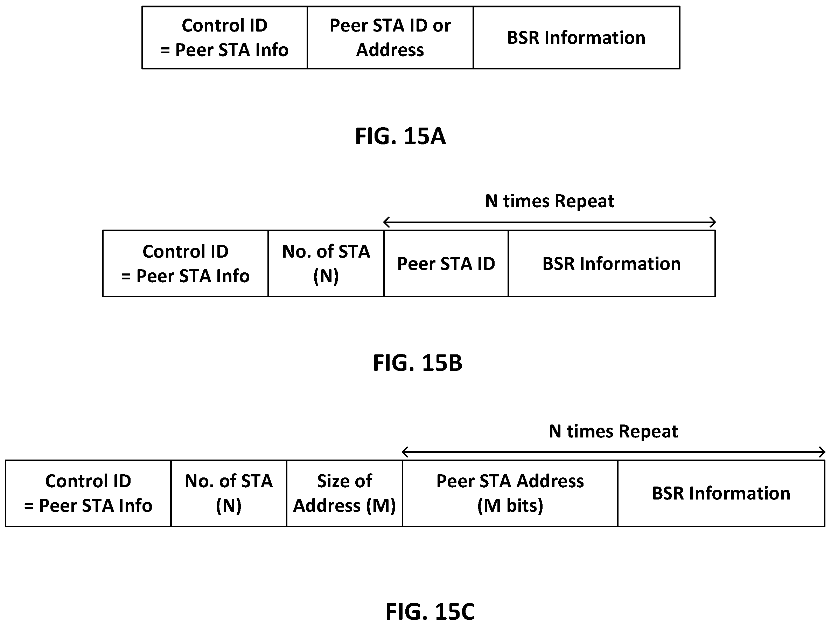

FIG. 15A, FIG. 15B, AND FIG. 15C show examples of peer STA information. The peer STA information may be used by a STA to signal peer STA information as well as BSR information to an AP. The peer STA information may be included in the HT control field of a QoS data/null frame. The peer STA information may include a Control ID subfield to indicate presence of peer STA information in the HT control field. The peer STA information may additionally include one or subfields to signal the identifier/address of one or more peer STAs and one or more subfields to signal BSR information for the one or more peer STAs. The subfields signaling BSR information may be BSR control subfields as discussed above.

The peer STA information as shown in FIG. 15A may signal a single peer STA identifier/address and single BSR information subfield. The peer STA information as shown in FIG. 15B and FIG. 15C may signal more than one peer STA identifier/address and more than one associated BSR information subfields. The peer STA information as shown in FIG. 15B and FIG. 15C may include a subfield indicating the number of peer STAs whose identifiers/addresses and BSR information are being signaled. The peer STA information as shown in FIG. 15C may include a subfield indicating the size of a peer STA address (e.g., 8, 12, 16, or 24 bits) where peer STA addresses (e.g., MAC addresses) are signaled.

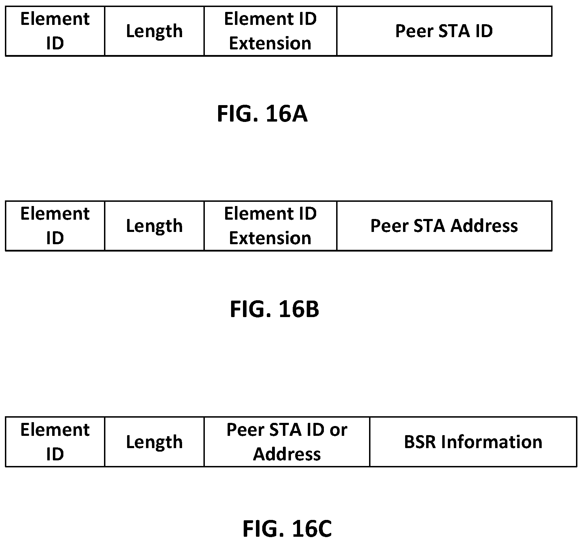

The P2P BSR and/or the identifier/address of the peer STA may be provided in a peer STA information element that may be carried in an existing or a new action frame. Examples of such a peer STA information element are provided in FIG. 16A, FIG. 16B, and FIG. 16C for the purpose of illustration. The peer STA information element may include an Element ID subfield, a length subfield, an Element ID Extension, a peer STA ID or Address subfield, and optionally a BSR information subfield.

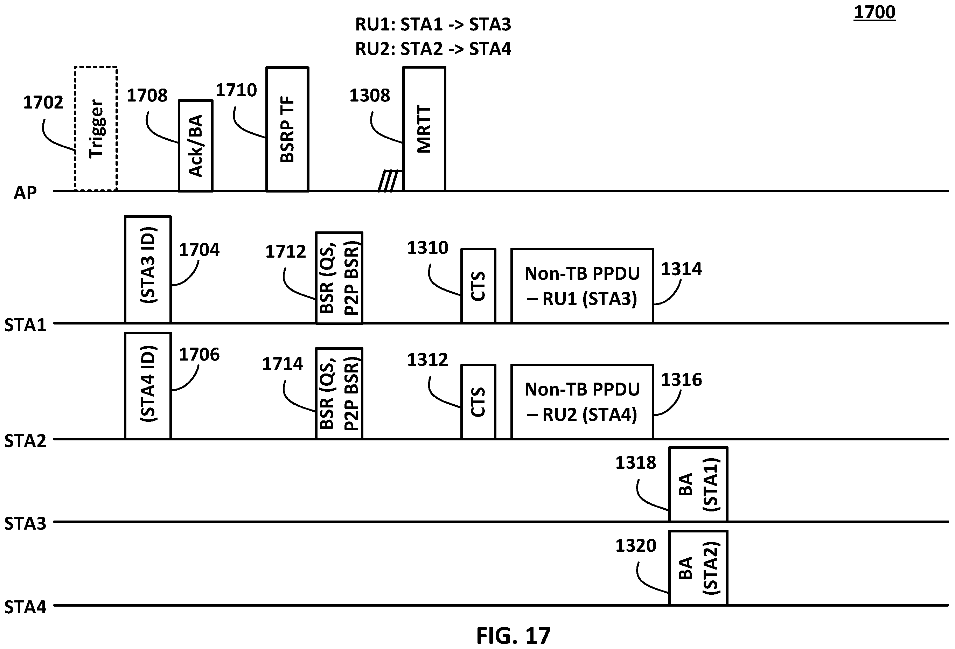

FIG. 17 shows an example 1700 of another FDMA-based TXS procedure. Example 1700 is provided for the purpose of illustration only and is not limiting of embodiments. Example 1700 as shown in FIG. 17 may include an AP and a plurality of STAs, STA1, STA2, STA3, and STA4. The plurality of STAs, STA1, STA2, STA3, and STA4, may be associated with the AP. The AP and the plurality of STAs may support FDMA mode according to which the AP and the STAs may operate on multiple frequency subchannels (e.g., 20 MHz subchannels).

Example 1700 may begin by the AP sending (e.g. transmitting) a trigger frame 1702. Trigger frame 1702 may be configured to solicit one or more STAs (e.g., STA1 and STA2) to send (e.g. transmit) peer STA information to the AP. STA1 and STA2 may send (e.g. transmit) frames 1704 and 1706 respectively to the AP based on (e.g. in response to) trigger frame 1702. Frames 1704 and 1706 may each include a QoS data frame, a QoS null frame, or an action frame.

Frames 1704 and 1706 may include peer STA information of STA1 and STA2 respectively. The peer STA information may include one or more identifiers/addresses of STAs with which the solicited STA has established P2P (e.g., TDLS, Wi-Fi direct, etc.) connection. The peer STA information may include the identifier/address of a single peer STA of the solicited STA. The peer STA identified in frames 1704 and 1706 may be the peer STA with which the solicited STA has the highest priority traffic. In example 1700, frame 1704 may include peer STA information of STA1, which includes an identifier/address of STA3. Frame 1706 may include peer STA information of STA2, which includes an identifier/address of STA4. The identifier/address of the peer STA may include an AID of the peer STA, an identifier of the P2P connection with the peer STA, an index associated with the peer STA (e.g., order of P2P connection of the peer STA with the STA), or an address (e.g., MAC address or N LSBs of MAC address) of the peer STA.

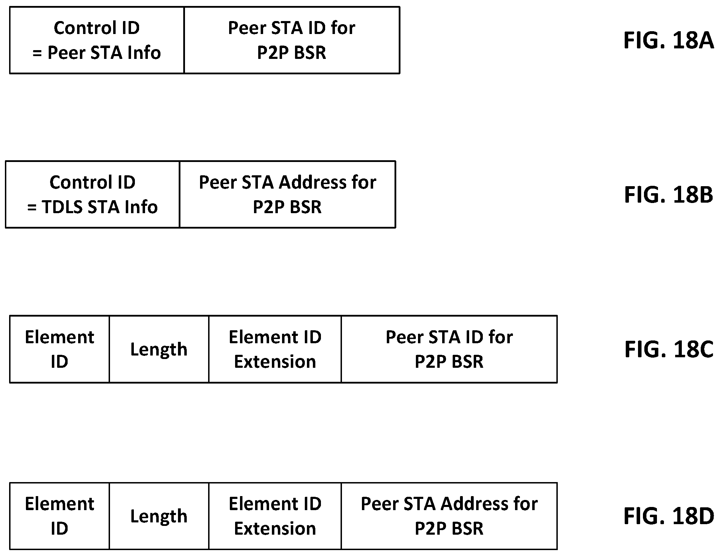

The peer STA information may be included in frames 1704 and 1706 using an aggregated control (A-control) field as shown in FIG. 18A or FIG. 18B or using a peer STA information element as shown in FIG. 18C or FIG. 18D. The A-control field may include a Control ID (peer STA info or TDLS STA info) and an identifier or address of the peer STA (which BSR will be transmitted subsequently). The peer STA information element may include an Element ID subfield, a length subfield, an Element ID Extension, a peer STA ID or Address subfield. The peer STA information may be included in an HT control field, where frames 1704 and 1706 are QoS data/null frames. The peer STA information may be included in a peer STA information element if frames 1704 and 1706 are new action frame or existing action frame.

The AP may acknowledge frames 1704 and 1706 by sending an Ack/BA frame 1708 upon receiving frames 1704 and 1706. The Ack/BA frame 1708 may be included in a multi-STA BlockAck frame. The AP may subsequently obtain a TXOP. The AP may send (e.g. transmit) a BSRP trigger frame 1710 before or after obtaining the TXOP. BSRP trigger frame 1710 may solicit STA1 and STA2 for P2P BSRs. BSRP trigger frame 1710 may include an indication that P2P BSRs are solicited, that is, BSRs for established P2P connections of STA1 and STA2.

STA 1 and STA 2 may generate and send (e.g. transmit) TB PPDUs 1712 and 1714 respectively upon receiving BSRP trigger frame 1710. TB PPDUs 1712 and 1712 may each include one or more P2P BSRs from STA1 and STA2 respectively. A P2P BSR may include a queue size for a P2P connection of the transmitting STA. TB PPDUs 1712 and 1714 include P2P BSRs for peer STAs that were previously signaled to the AP by STA1 and STA2 respectively. TB PPDU 1712 may include a P2P BSR for STA3 which peer STA information was signaled to the AP in frame 1704, and TB PPDU 1712 may include a P2P BSR for STA4 which peer STA information was signaled to the AP in frame 1706. TB PPDU 1712/1714 may include multiple corresponding P2P BSRs if peer STA information of multiple P2P connections was signaled in frame 1704/1706.

TB PPDUs 1712 and 1714 may each include one or more QoS data/null frames. The one or more QoS data/null frames may include one or more QoS control fields and/or one or more HT control fields. P2P BSRs may be included in QoS control and/or HT control fields of QoS data/null frames. A QoS control field as described above with respect to FIG. 4 may include a traffic identifier (TID) subfield, an ack policy indicator subfield, and a queue size (QS) subfield (or a TXOP duration requested subfield). An HT control field may include a BSR control subfield formed from an access category index (ACI) bitmap subfield, a delta TID subfield, an ACI high subfield, a scaling factor subfield, a queue size high subfield, and a queue size all subfield of the HT control field.

The AP may send (e.g. transmit) a MRTT frame 1308 to STA1 and STA2 based on receiving TB PPDUs 1712 and 1714 from STA1 and STA2. MRTT frame 1308 may be as described above with respect to FIG. 13. STA1 and STA2 based on (e.g. respond to) MRTT frame 1308 in the same fashion as described above with respect to FIG. 13, including sending (e.g. transmitting) respective non-TB PPDUs 1314 and 1316 to STA3 and STA4 respectively during the allocated time portion of the TXOP.

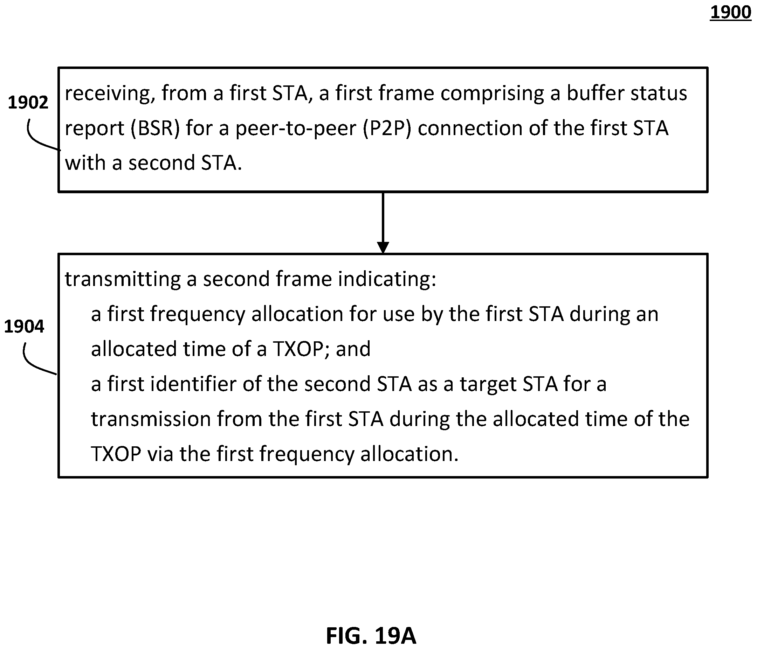

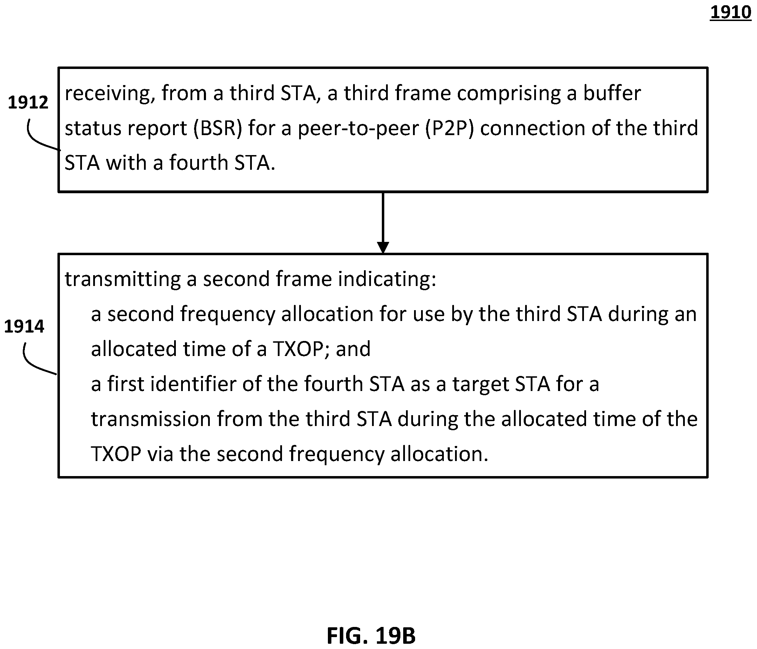

FIG. 19A and FIG. 19B show examples of FDMA-based TXS procedures. Processes 1900 and 1910 are provided for the purpose of illustration only and is not limiting of embodiments. Processes 1900 and 1910 may be performed by an AP.

Process 1900 as shown in FIG. 19A begins in step 1902, which may include receiving, from a STA (e.g. first STA), a first frame. Similarly, process 1910 as shown in FIG. 19B begins in step 1912, which may include receiving, from a STA (e.g. third STA), a third frame. The first frame and third frame may each comprise a buffer status report (BSR) for a peer-to-peer (P2P) connection of the first STA with a second STA, or a P2P connection of the third STA with a fourth STA. The first and third frame may each comprise a trigger-based (TB) physical layer (PHY) protocol data unit (PPDU) or a non-TB PPDU. The BSR indicates a non-zero queue size for the P2P connection of the first STA with the second STA or the P2P connection of the third STA with the fourth STA.

The first frame may further comprise a first identifier of the second STA. The first identifier of the second STA may comprise an association identifier (AID) of the second STA, an identifier of the P2P connection of the first STA with the second STA, an index associated with the second STA, or an address of the second STA. The address of the second STA may comprise a MAC address of the second STA or the N least significant bits (LSBs) of the MAC address of the second STA.

Likewise, the third frame may further comprise a first identifier of the fourth STA. The first identifier of the fourth STA may comprise an association identifier (AID) of the fourth STA, an identifier of the P2P connection of the third STA with the fourth STA, an index associated with the fourth STA, or an address of the fourth STA. The address of the fourth STA may comprise a MAC address of the fourth STA or the N least significant bits (LSBs) of the MAC address of the fourth STA.

Process 1900 may include, before or after step 1902, receiving, from the first STA, a fourth frame comprising the first identifier of the second STA. Process 1900 may further include sending (e.g. transmitting) a trigger frame to the first STA; and receiving the fourth frame comprising the first identifier of the second STA in response to the trigger frame. The fourth frame may be a QoS data frame, a QoS null frame, or an action frame. The fourth frame may comprise a plurality of identifiers of a plurality of peer STAs of the first STA, the plurality of peer STAs comprising the second STA. The plurality of peer STAs of the first STA may comprise STAs having an established P2P (e.g., TDLS, Wi-Fi direct, etc.) connection with the first STA.

Process 1910 may include, before or after step 1912, receiving, from the third STA, a fifth frame comprising the second identifier of the fourth STA. Process 1910 may further include sending (e.g. transmitting) a trigger frame to the third STA; and receiving the fifth frame comprising the second identifier of the fourth STA in response to the trigger frame. The fifth frame may be a QoS data frame, a QoS null frame, or an action frame. The fifth frame may comprise a plurality of identifiers of a plurality of peer STAs of the third STA, the plurality of peer STAs comprising the fourth STA. The plurality of peer STAs of the third STA may comprise STAs having an established P2P (e.g., TDLS, Wi-Fi direct, etc.) connection with the third STA.

The first and third frame may each comprise a QoS data frame or a QoS null frame. The BSR for the P2P connection of the first STA with the second STA may be provided in a QoS Control field or an HT Control field of the first frame. The BSR for the P2P connection of the third STA with the fourth STA may be provided in a QoS Control field or an HT Control field of the third frame. The first identifier of the second STA may be provided in the HT Control field of the first frame. The first identifier of the fourth STA may be provided in the HT Control field of the third frame. The HT Control field may comprise a Control ID subfield that indicates presence of information of the second STA or the fourth STA in the HT Control field. The HT Control field may comprise a plurality of identifiers of a plurality of peer STAs of the first STA (including the second STA) or a plurality of identifiers of a plurality of peer STAs of the third STA (including the fourth STA). The BSR for the P2P connection of the first STA with the second STA as well as the first identifier of the second STA may be provided in the HT Control field of the first frame. The BSR for the P2P connection of the third STA with the fourth STA as well as the first identifier of the fourth STA may be provided in the HT Control field of the third frame.

The first and third frame may each comprise an action frame. The action frame may comprise a peer STA information element comprising the BSR for the P2P connection of the first STA with the second STA, the first identifier of the second STA, the BSR for the P2P connection of the third STA with the fourth STA and/or the first identifier of the fourth STA.

In step 1904, process 1900 may include sending (e.g. transmitting) a second frame indicating: a first frequency allocation for use by the first STA during an allocated time of a TXOP obtained by the AP; and a second identifier of the second STA as a target STA for a transmission from the first STA during the allocated time of the TXOP via the first frequency allocation. Summarily in step 1914, process 1910 may include sending (e.g. transmitting) the second frame indicating: a second frequency allocation for use by the third STA during an allocated time of a TXOP obtained by the AP; and a second identifier of the fourth STA as a target STA for a transmission from the third STA during the allocated time of the TXOP via the second frequency allocation.

Process 1900 may include, before step 1904, determining the first frequency allocation, from among a plurality of frequency allocations, for use by the first STA during the allocated time of the TXOP. The first frequency allocation may correspond to a first subchannel of a plurality of subchannels available for allocation by the AP. The second identifier of the second STA may comprise an association identifier (AID) of the second STA, an identifier of the P2P connection of the first STA with the second STA, an index associated with the second STA, or an address of the second STA.

Process 1910 may include, before step 1914, determining the second frequency allocation, from among a plurality of frequency allocations, for use by the third STA during the allocated time of the TXOP. The second frequency allocation may correspond to a second subchannel of a plurality of subchannels available for allocation by the AP. The second identifier of the fourth STA may comprise an association identifier (AID) of the fourth STA, an identifier of the P2P connection of the third STA with the fourth STA, an index associated with the fourth STA, or an address of the fourth STA.

The second frame may further indicate a Triggered TXOP sharing (TXS) mode for the TXOP. The first and third STA may send (e.g. transmit) to the AP or to another STA during the allocated time of the TXOP according to the indicated TXS mode. The second frame may comprise an MRTT frame. The second frame may further indicate: a second frequency allocation for use by a third STA during the allocated time of the TXOP; and a fourth identifier of a fourth STA as a target STA for a transmission from the third STA during the allocated time of the TXOP via the second frequency allocation. The first frequency allocation may correspond to a first resource unit (RU) and the second frequency allocation corresponds to a second RU. Sending (e.g. transmitting) the second frame may comprise sending (e.g. transmitting) the second frame on a first frequency subchannel and on a second frequency subchannel simultaneously. Process 1900 may include sending (e.g. transmitting) a Buffer Status Report Poll (BSRP) trigger frame to the first STA before step 1902; and receiving the first frame from the first STA based on (e.g. in response to) the BSRP trigger frame. Likewise, process 1910 may include sending (e.g. transmitting) a Buffer Status Report Poll (BSRP) trigger frame to the third STA before step 1912; and receiving the third frame from the third STA based on (e.g. in response to) the BSRP trigger frame.

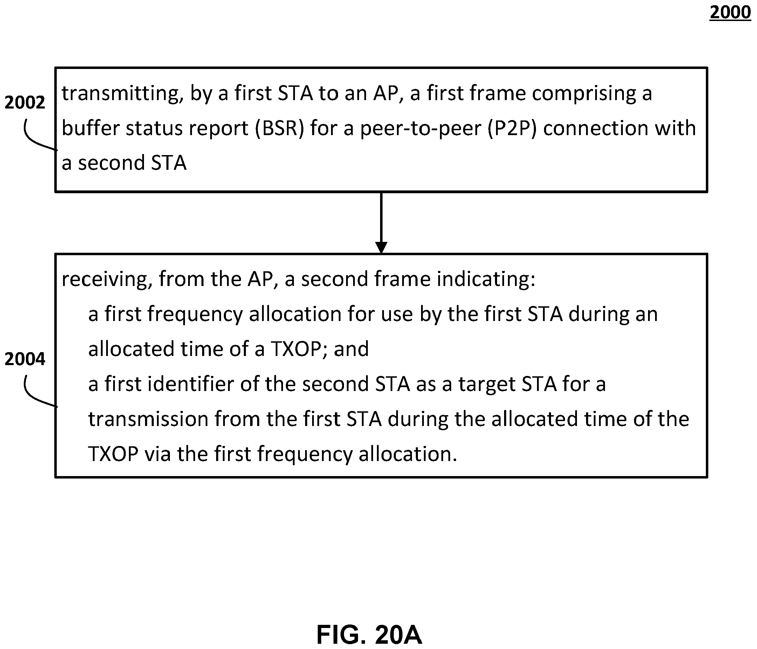

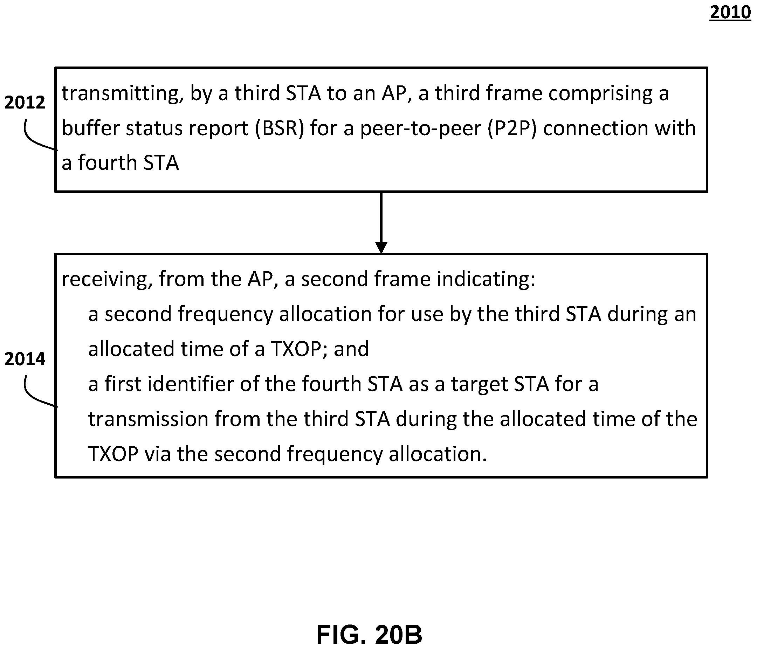

Processes 2000 and 2010 as shown in FIG. 20A and FIG. 20B are provided for the purpose of illustration only and are not limiting of embodiments. Process 2000 may be performed by a first STA. Process 2000 may begin in step 2002, which includes sending (e.g. transmitting), by the first STA to an AP, a first frame comprising a buffer status report (BSR) for a peer-to-peer (P2P) connection of the first STA with a second STA. Likewise, process 2010 may be performed by a third STA. Process 2010 may begin in step 2012, which includes sending (e.g. transmitting), by the third STA to an AP, a third frame comprising a buffer status report (BSR) for a peer-to-peer (P2P) connection of the third STA with a fourth STA. The first and third frame may each comprise a trigger-based (TB) physical layer (PHY) protocol data unit (PPDU) or a non-TB PPDU. The BSR may indicate a non-zero queue size for the P2P connection of the first STA with the second STA or the P2P connection of the third STA with the fourth STA.

The first frame may further comprise a first identifier of the second STA. The first identifier of the second STA may comprise an association identifier (AID) of the second STA, an identifier of the P2P connection of the first STA with the second STA, an index associated with the second STA, or an address of the second STA. The address of the second STA may comprise a MAC address of the second STA or the N least significant bits (LSBs) of the MAC address of the second STA.

Likewise, the third frame may further comprise a first identifier of the fourth STA. The first identifier of the fourth STA may comprise an association identifier (AID) of the fourth STA, an identifier of the P2P connection of the third STA with the fourth STA, an index associated with the fourth STA, or an address of the fourth STA. The address of the fourth STA may comprise a MAC address of the fourth STA or the N least significant bits (LSBs) of the MAC address of the fourth STA.

Process 2000 may include, before or after step 2002, sending (e.g. transmitting), to the AP, a fourth frame comprising the first identifier of the second STA. Process 2000 may further include receiving a trigger frame from the AP; and sending (e.g. transmitting) the fourth frame comprising the first identifier of the second STA based on (e.g. in response to) the trigger frame. The fourth frame may be a QoS data frame, a QoS null frame, or an action frame. The fourth frame may comprise a plurality of identifiers of a plurality of peer STAs of the first STA, the plurality of peer STAs comprising the second STA. The plurality of peer STAs of the first STA may comprise STAs having an established P2P (e.g., TDLS, Wi-Fi direct, etc.) connection with the first STA.

Process 2010 may include, before or after step 2012, sending (e.g. transmitting), to the AP, a fifth frame comprising the second identifier of the fourth STA. Process 2010 may further include receiving a trigger frame from the AP; and sending (e.g. transmitting) the fifth frame comprising the second identifier of the fourth STA based on (e.g. in response to) the trigger frame. The fifth frame may be a QoS data frame, a QoS null frame, or an action frame. The fifth frame may comprise a plurality of identifiers of a plurality of peer STAs of the third STA, the plurality of peer STAs comprising the fourth STA. The plurality of peer STAs of the third STA may comprise STAs having an established P2P (e.g., TDLS, Wi-Fi direct, etc.) connection with the third STA.

The first and third frame may each comprise a QoS data frame or a QoS null frame. The BSR for the P2P connection of the first STA with the second STA may be provided in a QoS Control field or an HT Control field of the first frame. The BSR for the P2P connection of the third STA with the fourth STA may be provided in a QoS Control field or an HT Control field of the third frame. The first identifier of the second STA may be provided in the HT Control field of the first frame. The first identifier of the fourth STA may be provided in the HT Control field of the third frame. The HT Control field may comprise a Control ID subfield that indicates presence of information of the second STA or the fourth STA in the HT Control field. The HT Control field may comprise a plurality of identifiers of a plurality of peer STAs of the first STA (including the second STA) or a plurality of identifiers of a plurality of peer STAs of the third STA (including the fourth STA). The BSR for the P2P connection of the first STA with the second STA as well as the first identifier of the second STA may be provided in the HT Control field of the first frame. The BSR for the P2P connection of the thirtd STA with the fourth STA as well as the first identifier of the fourth STA may be provided in the HT Control field of the third frame.

The first and third frame may each comprise an action frame. The action frame may comprise a peer STA information element comprising the BSR for the P2P connection of the first STA with the second STA, the first identifier of the second STA, the BSR for the P2P connection of the third STA with the fourth STA and/or the first identifier of the fourth STA.

In step 2004, process 2000 may include receiving, from the AP, a second frame indicating: a first frequency allocation for use by the first STA during an allocated time of a TXOP obtained by the AP; and a second identifier of the second STA as a target STA for a transmission from the first STA during the allocated time of the TXOP via the first frequency allocation. The first frequency allocation may correspond to a first subchannel of a plurality of subchannels available for allocation by the AP. The second identifier of the second STA may comprise an association identifier (AID) of the second STA, an identifier of the P2P connection of the first STA with the second STA, an index associated with the second STA, or an address of the second STA.

In step 2014, process 2010 may include receiving, from the AP, a second frame indicating: a second frequency allocation for use by the third STA during an allocated time of a TXOP obtained by the AP; and a second identifier of the fourth STA as a target STA for a transmission from the third STA during the allocated time of the TXOP via the second frequency allocation. The second frequency allocation may correspond to a second subchannel of a plurality of subchannels available for allocation by the AP. The second identifier of the fourth STA may comprise an association identifier (AID) of the fourth STA, an identifier of the P2P connection of the third STA with the fourth STA, an index associated with the fourth STA, or an address of the fourth STA.

The second frame may further indicate a Triggered TXOP sharing (TXS) mode for the TXOP. The first STA may transmit to the AP or to another STA during the allocated time of the TXOP according to the indicated TXS mode. The third STA may transmit to the AP or to another STA during the allocated time of the TXOP according to the indicated TXS mode. The second frame comprises an MRTT frame.

The second frame may further indicate: a second frequency allocation for use by a third STA during the allocated time of the TXOP; and a third identifier of a fourth STA as a target STA for a transmission from the third STA during the allocated time of the TXOP via the second frequency allocation. The first frequency allocation may correspond to a first resource unit (RU) and the second frequency allocation corresponds to a second RU.

The second frame may be sent (e.g. transmitted) by the AP on a first frequency subchannel and on a second frequency subchannel simultaneously. Process 2000 may include, before step 2002, receiving a Buffer Status Report Poll (BSRP) trigger frame from the AP; and sending (e.g. transmitting) the first frame from the first STA to the AP based on (e.g. in response to) the BSRP trigger frame. Process 2000 may further include, after step 2004, transmitting, to the AP, a Clear to Send (CTS) frame in response to the second frame. Likewise, process 2010 may include, before step 2012, receiving a Buffer Status Report Poll (BSRP) trigger frame from the AP; and sending (e.g. transmitting) the third frame from the third STA to the AP based on (e.g. in response to) the BSRP trigger frame. Process 2010 may further include, after step 2014, transmitting, to the AP, a Clear to Send (CTS) frame in response to the second frame.

Process 2000 may further include, after step 2004, sending (e.g. transmitting), to the second STA, a sixth frame during the allocated time of the TXOP via the first frequency allocation. The sixth frame comprises a trigger-based (TB) physical layer (PHY) protocol data unit (PPDU) or a non-TB PPDU. Process 2010 may further include, after step 2014, sending (e.g. transmitting), to the fourth STA, a seventh frame during the allocated time of the TXOP via the first frequency allocation. The seventh frame comprises a trigger-based (TB) physical layer (PHY) protocol data unit (PPDU) or a non-TB PPDU.

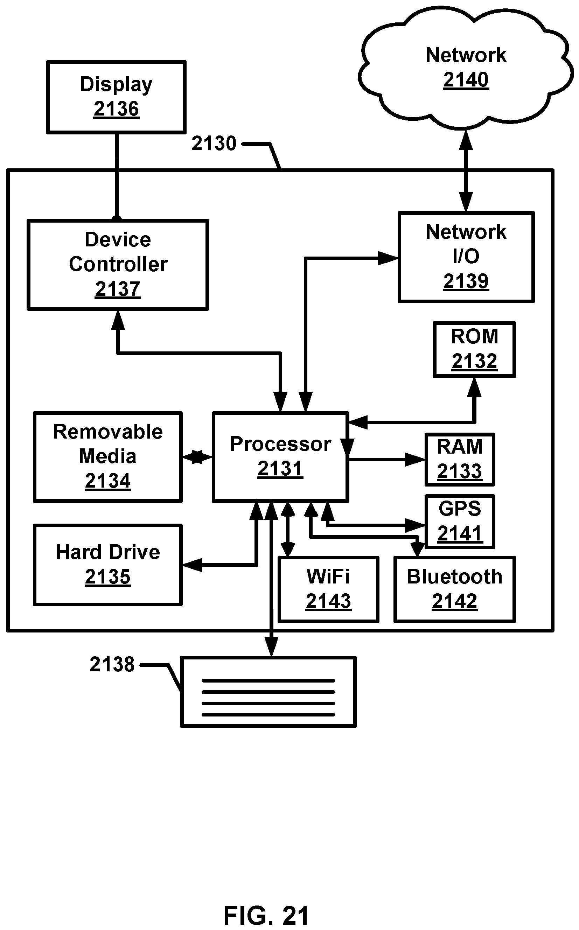

FIG. 21 shows example elements of a computing device that may be used to implement any of the various devices described herein, including, for example, a STA (e.g., 106-1, 106-2, 106-3, 106-4, 106-5, 106-6, 106-7, 106-8, 811, 911, 912), an AP (e.g., 104-1, 104-2, 810, 910), communication devices (e.g., 210, 260), and/or any computing and/or communication device described herein. The computing device 2130 may comprise one or more processors 2131, which may execute instructions stored in the random-access memory (RAM) 2133, the removable media 2134 (such as a Universal Serial Bus (USB) drive, compact disk (CD) or digital versatile disk (DVD), or floppy disk drive), or any other desired storage medium. Instructions may also be stored in an attached (or internal) hard drive 2135. The computing device 2130 may also comprise a security processor (not shown), which may execute instructions of one or more computer programs to monitor the processes executing on the processor 2131 and any process that requests access to any hardware and/or software components of the computing device 2130 (e.g., ROM 2132, RAM 2133, the removable media 2134, the hard drive 2135, the device controller 2137, a network interface 2139, a GPS 2141, a Bluetooth interface 2142, a WiFi interface 2143, etc.). The computing device 2130 may comprise one or more output devices, such as the display 2136 (e.g., a screen, a display device, a monitor, a television, etc.), and may comprise one or more output device controllers 2137, such as a video processor. There may also be one or more user input devices 2138, such as a remote control, keyboard, mouse, touch screen, microphone, etc. The computing device 2130 may also comprise one or more network interfaces, such as a network interface 2139, which may be a wired interface, a wireless interface, or a combination of the two. The network interface 2139 may provide an interface for the computing device 2130 to communicate with a network 2140 (e.g., a RAN, or any other network). The network interface 2139 may comprise a modem (e.g., a cable modem), and the external network 2140 may comprise communication links, an external network, an in-home network, a provider's wireless, coaxial, fiber, or hybrid fiber/coaxial distribution system (e.g., a DOCSIS network), or any other desired network. Additionally, the computing device 2130 may comprise a location-detecting device, such as a global positioning system (GPS) microprocessor 2141, which may be configured to receive and process global positioning signals and determine, with possible assistance from an external server and antenna, a geographic position of the computing device 2130.

The example in FIG. 21 may be a hardware configuration, although the components shown may be implemented as software as well. Modifications may be made to add, remove, combine, divide, etc. components of the computing device 2130 as desired. Additionally, the components may be implemented using basic computing devices and components, and the same components (e.g., processor 2131, ROM 2132, display 2136, etc.) may be used to implement any of the other computing devices and components described herein. For example, the various components described herein may be implemented using computing devices having components such as a processor executing computer-executable instructions stored on a computer-readable medium, as shown in FIG. 21. Some or all of the entities described herein may be software based, and may co-exist in a common physical platform (e.g., a requesting entity may be a separate software process and program from a dependent entity, both of which may be executed as software on a common computing device).

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. A method comprising: receiving, by an access point (AP) from a first station (STA), a first frame comprising a buffer status report (BSR) associated with a peer-to-peer (P2P) connection between the first STA and a second STA.

Clause 1B. The method of clause 1B, further comprising: sending, by the AP and based on the BSR, a second frame, wherein the second frame indicates: a first frequency allocation associated with a transmission by the first STA and during an allocated time of a transmission opportunity (TXOP) obtained by the AP; and a first identifier of the second STA, wherein the second STA is a target STA of the transmission by the first STA via the first frequency allocation. Reference to clause 1 herein may refer to one or both of clause lA and clause 1B.

Clause 2. The method of clause 1, wherein the second frame further indicates a Triggered TXOP sharing (TXS) mode related to the TXOP; and the method further comprising: based on the TXS mode, sending, during the allocated time of the TXOP and by the first STA, a Clear to Send (CTS) frame, to the AP or the second STA.

Clause 3. The method of any one of clauses 1-2, further comprising: sending a Buffer Status Report Poll (BSRP) trigger frame to the first STA; and receiving, based on the BSRP trigger frame, the first frame from the first STA.

Clause 4. The method of any one of clauses 1-3, wherein the second frame further indicates: a second frequency allocation to be used by a third STA during the allocated time of the TXOP; and a second identifier of a fourth STA as a target STA associated with a transmission from the third STA and during the allocated time of the TXOP via the second frequency allocation.

Clause 5. The method of any one of clauses 1-4, further comprising: sending a trigger frame to the first STA; and receiving, based on the trigger frame, a third frame comprising the first identifier of the second STA, wherein the third frame further comprises at least one of: a Quality of Service (QoS) data frame, a QoS null frame, or an action frame.

Clause 6. The method of any one of clauses 1-5, wherein the BSR associated with the P2P connection of the first STA with the second STA is indicated in at least one of: a Quality of Service (QoS) Control field, or a High Throughput (HT) Control field of the first frame.

Clause 7. The method of any one of clauses 1-6, further comprising determining the first frequency allocation, from among a plurality of frequency allocations, associated with use by the first STA and during the allocated time of the TXOP.

Clause 8. The method of any one of clauses 1-7, wherein sending the second frame comprises sending the second frame on a first frequency subchannel and on a second frequency subchannel simultaneously.

Clause 9. The method of any one of clauses 1-8, the method further comprises: receiving, based on the second frame sent on the first frequency subchannel and from the first STA, a first Clear to Send (CTS) frame; and receiving, based on the second frame sent on the second frequency subchannel and from a third STA, a second CTS frame.

Clause 10. The method of any one of clauses 1-9, wherein the first identifier of the second STA comprises at least one of: an association identifier (AID) of the second STA, an identifier of the P2P connection of the first STA with the second STA, an index associated with the second STA, or an address of the second STA.

Clause 11. The method of any one of clauses 1-10, wherein the address of the second STA comprises at least one of: a Medium Access Control (MAC) address of the second STA, or an N-least significant bits (LSBs) of the MAC address of the second STA.

Clause 12. The method of any one of clauses 1-11, wherein the first frame further comprises a second identifier of the second STA; and the second identifier of the second STA further comprises at least one of: an association identifier (AID) of the second STA, an identifier of the P2P connection of the first STA with the second STA, an index associated with the second STA, or an address of the second STA.

Clause 13. A computing device comprising: one or more processors; and memory storing instructions that, when executed by the one or more processors, cause the computing device to perform the method of any one of clauses 1-12.

Clause 14. A system comprising: an access point (AP) configured to perform the method of any one of clauses 1-12; and a first station (STA) configured to send the first frame from the AP.

Clause 15. A computer-readable medium storing instructions that, when executed, cause performance of the method of any one of clauses 1-12.

Clause 16. A method comprising: receiving, by an access point (AP) from a first station (STA), a first frame comprising a buffer status report (BSR) associated with a peer-to-peer (P2P) connection with a second STA;

Clause 16B. The method of clause 16A, further comprising: based on the BSR indicating a non-zero queue size associated with the P2P connection, determining a first frequency allocation, from among a plurality of frequency allocations, associated with use by the first STA during an allocated time of a transmission opportunity (TXOP) obtained by the AP.

Clause 16C. The method of any one of clauses 16A to 16B, further comprising: sending a multi-user request-to-send (MU-RTS) Triggered TXOP sharing (TXS) trigger (MRTT) frame indicating: the first frequency allocation associated with use by the first STA during the allocated time of the TXOP; a TXS mode associated with the TXOP, wherein based on the TXS mode the first STA sends, during the allocated time of the TXOP, a Clear to Send (CTS) frame to the AP or to the second STA; and a first identifier of the second STA, wherein the second STA is a target STA related to a transmission from the first STA during the allocated time of the TXOP via the first frequency allocation. Reference to clause 16 herein may refer to one or more of clause 16A, clause 16B, and/or clause 16C.

Clause 17. The method of clause 16, wherein sending the MRTT frame comprises sending the MRTT frame on a first frequency subchannel and on a second frequency subchannel simultaneously.

Clause 18. The method of any one of clauses 16-17, the method further comprises: receiving, based on the MRTT frame sent on the first frequency subchannel and from the first STA, a first CTS frame; and receiving, based on the MRTT frame sent on the second frequency subchannel and from a third STA, a second CTS frame.

Clause 19. The method of any one of clauses 16-18, wherein the first identifier of the second STA comprises at least one of: an association identifier (AID) of the second STA, an identifier of the P2P connection of the first STA with the second STA, an index associated with the second STA, or an address of the second STA.

Clause 20. The method of any one of clauses 16-19, wherein the address of the second STA comprises at least one of: a Medium Access Control (MAC) address of the second STA, or an N-least significant bits (LSBs) of the MAC address of the second STA.

Clause 21. The method of any one of clauses 16-20, wherein the first frame further comprises a second identifier of the second STA; and the second identifier of the second STA further comprises at least one of: an association identifier (AID) of the second STA, an identifier of the P2P connection of the first STA with the second STA, an index associated with the second STA, or an address of the second STA.

Clause 22. A computing device comprising: one or more processors; and memory storing instructions that, when executed by the one or more processors, cause the computing device to perform the method of any one of clauses 16-21.

Clause 23. A system comprising: an access point (AP) configured to perform the method of any one of clauses 16-21; and a first station (STA) configured to send the first frame.

Clause 24. A computer-readable medium storing instructions that, when executed, cause performance of the method of any one of clauses 16-21.

Clauses 25A. A method comprising: sending, by a first station (STA) to an access point (AP), a first frame comprising a buffer status report (BSR) associated with a peer-to-peer (P2P) connection between the first STA with a second STA;

Clause 25B. The method of clause 25A, further comprising: based on the BSR, receiving, from the AP, a second frame indicating: a first frequency allocation associated with a transmission by the first STA and during an allocated time of a transmission opportunity (TXOP) obtained by the AP; and a first identifier of the second STA, wherein the second STA is a target STA of the transmission by the first STA via the first frequency allocation. Reference to clause 25 herein may refer to one or both of clause 25A and clause 25B.

Clause 26. The method of clause 25, wherein the second frame further indicates a Triggered TXOP sharing (TXS) mode associated with the TXOP; and wherein the method further comprises: based on the TXS mode, sending, during the allocated time of the TXOP and by the first STA, to the AP or to the second STA, a Clear to Send (CTS) frame.

Clause 27. The method of any one of clauses 25-26, further comprising: receiving, from the AP, a Buffer Status Report Poll (BSRP) trigger frame; and based on the BSRP trigger frame, sending, to the AP, the first frame.

Clause 28. The method of any one of clauses 25-27, wherein the second frame further indicates: a second frequency allocation associated with use by a third STA during the allocated time of the TXOP; and a second identifier of a fourth STA as a target STA associated with a transmission from the third STA during the allocated time of the TXOP via the second frequency allocation.

Clause 29. The method of any one of clauses 25-28, further comprising: receiving, from the AP, a trigger frame; and sending, based on the trigger frame, a third frame comprising the first identifier of the second STA, wherein the third frame comprises at least one of: a Quality of Service (QoS) data frame, a QoS null frame, or an action frame.

Clause 30. The method of any one of clauses 25-29, wherein the BSR associated with the P2P connection of the first STA with the second STA is provided in at least one of: a QoS Control field of the first frame or a High Throughput (HT) Control field of the first frame.

Clause 31. The method of any one of clauses 25-30, wherein the first identifier of the second STA comprises at least one of: an association identifier (AID) of the second STA, an identifier of the P2P connection of the first STA with the second STA, an index associated with the second STA, or an address of the second STA.

Clause 32. A computing device comprising: one or more processors; and memory storing instructions that, when executed by the one or more processors, cause the computing device to perform the method of any one of clauses 25-31.

Clause 33. A system comprising: an access point (AP) configured to perform the method of any one of clauses 25-31; and a first station (STA) configured to send the first frame from the AP.

Clause 34. A computer-readable medium storing instructions that, when executed, cause performance of the method of any one of clauses 25-31.

Clause 35. The method of clauses 4-12, wherein the first frequency allocation corresponds to a first resource unit (RU) and the second frequency allocation corresponds to a second RU.

Clause 36. The method of any of clauses 1-12 or 35, wherein the second frame comprises a multi-user Request to Send (MU-RTS) Triggered TXOP sharing (TXS) trigger (MRTT) frame.

Clause 37. The method of any of clauses 1-12 or 35-36, wherein the BSR indicates a non-zero queue size for the P2P connection of the first STA with the second STA.

Clause 38. The method of any of clauses 1-12 or 35-37, wherein the first frame comprises a trigger-based (TB) physical layer (PHY) protocol data unit (PPDU) or a non-TB PPDU.

Clause 39. The method of any of clauses 1-12 or 35-38, wherein the first frame comprises a QoS data frame or a QoS null frame.

Clause 40. The method of any of clauses 1-12 or 35-39, wherein the BSR for the P2P connection of the first STA with the second STA is provided in a QoS Control field or a HT Control field of the first frame.

Clause 41. The method of clause 40, wherein the second identifier of the second STA is provided in the HT Control field of the first frame.

Clause 42. The method of any of clauses 40-41, wherein the HT Control field comprises a Control ID subfield that indicates presence of information of the second STA in the HT Control field.

Clause 43. The method of any of clauses 40-42, wherein the HT Control field comprises a plurality of identifiers of a plurality of peer STAs of the first STA, the plurality of peer STAs comprising the second STA.

Clause 44. The method of any of clauses 40-43, wherein the BSR for the P2P connection of the first STA with the second STA is provided in the HT Control field of the first frame.

Clause 45. The method of any of clauses 1-12 or 35-44, wherein the first frame comprises an action frame.

Clause 46. The method of any of clauses 1-12 or 35-45, wherein the action frame comprises a peer STA information element comprising the BSR for the P2P connection of the first STA with the second STA and/or the second identifier of the second STA.

Clause 47. The method of any of clauses 5-12 or 35-46, wherein the third frame comprises a plurality of identifiers of a plurality of peer STAs of the first STA, the plurality of peer STAs comprising the second STA.

Clause 48. The method of any of clauses 1-12 or 35-47, wherein the plurality of peer STAs of the first STA comprise STAs having an established TDLS connection with the first STA.

Clause 49. The method of any of clauses 25-31, wherein the first frequency allocation corresponds to a first resource unit (RU) and the second frequency allocation corresponds to a second RU.

Clause 50. The method of any of clauses 25-31 or 49, wherein the second frame comprises a multi-user Request to Send (MU-RTS) Triggered TXOP sharing (TXS) trigger (MRTT) frame.

Clause 51. The method of any of cluases 25-31 or 49-50, further sending, to the second STA, a fourth frame during the allocated time of the TXOP via the first frequency allocation.

Clause 52. The method of any of cluases 25-31 or 49-51, wherein the fourth frame comprises a trigger-based (TB) physical layer (PHY) protocol data unit (PPDU) or a non-TB PPDU.

Clause 53. The method of any of cluases 25-31 or 49-52, wherein the first frame comprises a trigger-based (TB) physical layer (PHY) protocol data unit (PPDU) or a non-TB PPDU.

Clause 54. The method of any of cluases 25-31 or 49-53, wherein the first frame further comprises a third identifier of the second STA.

Clause 55. The method of any of cluases 25-31 or 49-54, wherein the third identifier of the second STA comprises an association identifier (AID) of the second STA, an identifier of the P2P connection of the first STA with the second STA, an index associated with the second STA, or an address of the second STA.

Clause 56. The method of any of cluases 31 or 49-55, wherein the address of the second STA comprises a MAC address of the second STA or the N least significant bits (LSBs) of the MAC address of the second STA.

Clause 57. The method of any of cluases 25-31 or 49-56, wherein the first frame comprises a QoS data frame or a QoS null frame.

Clause 58. The method of any of cluases 30-31 or 49-57, wherein the third identifier of the second STA is provided in the HT Control field of the first frame.

Clause 59. The method of any of cluases 30-31 or 49-58, wherein the HT Control field comprises a Control ID subfield that indicates presence of information of the second STA in the HT Control field.

Clause 60. The method of any of cluases 30-31 or 49-59, wherein the HT Control field comprises a plurality of identifiers of a plurality of peer STAs of the first STA, the plurality of peer STAs comprising the second STA.

Clause 61. The method of any of cluases 25-31 or 49-60, wherein the first frame comprises an action frame; and wherein the action frame comprises a peer STA information element comprising the BSR for the P2P connection of the first STA with the second STA and/or the third identifier of the second STA.

Clause 62. The method of any of cluases 29-31 or 49-61, wherein the third frame comprises a plurality of identifiers of a plurality of peer STAs of the first STA, the plurality of peer STAs comprising the second STA.

Clause 63. The method of clause 62, wherein the plurality of peer STAs of the first STA comprise STAs having an established TDLS connection with the first STA.

An access point (AP) may perform a method comprising multiple operations. The AP may receive, from a first station (STA) (or first wireless device, or first computing device), a first frame comprising a buffer status report (BSR) associated with a peer-to-peer (P2P) connection between the first STA and a second STA (or second wireless device, or second computing device). The AP may send, based on the BSR, a second frame, wherein the second frame may indicate: a first frequency allocation associated with a transmission by the first STA and during an allocated time of a transmission opportunity (TXOP) obtained by the AP; and a first identifier of the second STA, wherein the second STA may be a target STA of the transmission by the first STA via the first frequency allocation. The second frame may indicate a Triggered TXOP sharing (TXS) mode related to the TXOP. The first STA may send, based on the TXS mode and during the allocated time of the TXOP, a Clear to Send (CTS) frame, to the AP or the second STA. The AP may send a Buffer Status Report Poll (BSRP) trigger frame to the first STA, and may receive, based on the BSRP trigger frame, the first frame from the first STA. The second frame may indicate a second frequency allocation to be used by a third STA during the allocated time of the TXOP, and a second identifier of a fourth STA as a target STA associated with a transmission from the third STA and during the allocated time of the TXOP via the second frequency allocation. The AP may send a trigger frame to the first STA, and may receive, based on the trigger frame, a third frame comprising the first identifier of the second STA, wherein the third frame may comprise at least one of: a Quality of Service (QoS) data frame, a QoS null frame, or an action frame. The BSR associated with the P2P connection of the first STA with the second STA may be indicated in at least one of: a Quality of Service (QoS) Control field, or a High Throughput (HT) Control field of the first frame. The AP determines the first frequency allocation, from among a plurality of frequency allocations, associated with use by the first STA and during the allocated time of the TXOP. The sending the second frame may comprise sending the second frame on a first frequency subchannel and on a second frequency subchannel simultaneously. The second STA may receive, based on the second frame sent on the first frequency subchannel and from the first STA, a first Clear to Send (CTS) frame. The fourth STA may receive, based on the second frame sent on the second frequency subchannel and from a third STA, a second CTS frame. The first identifier of the second STA may comprise at least one of: an association identifier (AID) of the second STA, an identifier of the P2P connection of the first STA with the second STA, an index associated with the second STA, or an address of the second STA. The address of the second STA may comprise at least one of: a Medium Access Control (MAC) address of the second STA, or an N-least significant bits (LSBs) of the MAC address of the second STA. The first frame may further comprise a second identifier of the second STA, and the second identifier of the second STA may further comprise at least one of: an association identifier (AID) of the second STA, an identifier of the P2P connection of the first STA with the second STA, an index associated with the second STA, or an address of the second STA. The first frequency allocation may correspond to a first resource unit (RU) and the second frequency allocation corresponds to a second RU. The second frame may comprise a multi-user Request to Send (MU-RTS) Triggered TXOP sharing (TXS) trigger (MRTT) frame. The BSR may indicate a non-zero queue size for the P2P connection of the first STA with the second STA. The first frame may comprise a trigger-based (TB) physical layer (PHY) protocol data unit (PPDU) or a non-TB PPDU. The first frame may comprise a QoS data frame or a QoS null frame. The BSR for the P2P connection of the first STA with the second STA may be provided in a QoS Control field or a HT Control field of the first frame. The second identifier of the second STA may be provided in the HT Control field of the first frame. The HT Control field may comprise a Control ID subfield that indicates presence of information of the second STA in the HT Control field. The HT Control field may comprise a plurality of identifiers of a plurality of peer STAs of the first STA, the plurality of peer STAs comprising the second STA. The BSR for the P2P connection of the first STA with the second STA may be provided in the HT Control field of the first frame. The first frame may comprise an action frame. The action frame may comprise a peer STA information element comprising the BSR for the P2P connection of the first STA with the second STA and/or the second identifier of the second STA. The third frame may comprise a plurality of identifiers of a plurality of peer STAs of the first STA, wherein the plurality of peer STAs may comprise the second STA. The plurality of peer STAs of the first STA may comprise STAs having an established TDLS connection with the first STA. The AP may comprise one or more processors; and memory storing instructions that, when executed by the one or more processors, cause the AP to perform the described method, additional operations and/or include the additional elements. A system may comprise the AP configured to perform the described method, additional operations and/or include the additional elements; and a first station (STA) configured to send the first frame from the AP. A computer-readable medium storing instructions that, when executed, may cause performance of the described method, additional operations and/or include the additional elements.

An access point (AP) may perform a method comprising multiple operations. The AP may receive, from a first station (STA) (or a first wireless device, or a first computing device), a first frame comprising a buffer status report (BSR) associated with a peer-to-peer (P2P) connection with a second STA (or a second wireless device, or a second computing device). Based on the BSR indicating a non-zero queue size associated with the P2P connection, the AP may determine a first frequency allocation, from among a plurality of frequency allocations, associated with use by the first STA during an allocated time of a transmission opportunity (TXOP) obtained by the AP. The AP may send a multi-user request-to-send (MU-RTS) Triggered TXOP sharing (TXS) trigger (MRTT) frame indicating: the first frequency allocation associated with use by the first STA during the allocated time of the TXOP, and a TXS mode associated with the TXOP, wherein based on the TXS mode, the first STA sends, during the allocated time of the TXOP, a Clear to Send (CTS) frame to the AP or to the second STA, and a first identifier of the second STA, wherein the second STA may be a target STA related to a transmission from the first STA during the allocated time of the TXOP via the first frequency allocation. The sending the MRTT frame may comprise sending the MRTT frame on a first frequency subchannel and on a second frequency subchannel simultaneously. The second STA may receive, based on the MRTT frame sent on the first frequency subchannel and from the first STA, a first CTS frame. The fourth STA may receive, based on the MRTT frame sent on the second frequency subchannel and from a third STA, a second CTS frame. The first identifier of the second STA may comprise at least one of: an association identifier (AID) of the second STA, an identifier of the P2P connection of the first STA with the second STA, an index associated with the second STA, or an address of the second STA. The address of the second STA may comprise at least one of: a Medium Access Control (MAC) address of the second STA, or an N-least significant bits (LSBs) of the MAC address of the second STA. The first frame may further comprise a second identifier of the second STA.The second identifier of the second STA may further comprise at least one of: an association identifier (AID) of the second STA, an identifier of the P2P connection of the first STA with the second STA, an index associated with the second STA, or an address of the second STA. An AP may comprise: one or more processors; and memory storing instructions that, when executed by the one or more processors, cause the AP to perform the described method, additional operations and/or include the additional elements. A system may comprise: an access point (AP) configured to perform the the described method, additional operations and/or include the additional elements; and a first station (STA) configured to send the first frame from the AP. A computer-readable medium storing instructions that, when executed, may cause performance of the described method, additional operations and/or include the additional elements.

A first station (STA) (or a first wireless device, or a first computing device) may perform a method comprising multiple operations. The first STA may send, to an access point (AP), a first frame comprising a buffer status report (BSR) associated with a peer-to-peer (P2P) connection between the first STA with a second STA (or a second wireless device, or a second computing device). Based on the BSR, the first STA may receive, from the AP, a second frame indicating: a first frequency allocation associated with a transmission by the first STA and during an allocated time of a transmission opportunity (TXOP) obtained by the AP; and a first identifier of the second STA, wherein the second STA may be a target STA of the transmission by the first STA via the first frequency allocation. The second frame may further indicate a Triggered TXOP sharing (TXS) mode associated with the TXOP. Based on the TXS mode, the first STA may send, during the allocated time of the TXOP, to the AP or to the second STA, a Clear to Send (CTS) frame. The first STA may receive, from the AP, a Buffer Status Report Poll (BSRP) trigger frame. Based on the BSRP trigger frame, the first STA may send, to the AP, the first frame. The second frame may further indicate a second frequency allocation associated with use by a third STA during the allocated time of the TXOP, and a second identifier of a fourth STA as a target STA associated with a transmission from the third STA during the allocated time of the TXOP via the second frequency allocation. The first STA may receive, from the AP, a trigger frame. The first STA may send, based on the trigger frame, a third frame comprising the first identifier of the second STA, wherein the third frame may comprise at least one of: a Quality of Service (QoS) data frame, a QoS null frame, or an action frame. The BSR associated with the P2P connection of the first STA with the second STA may be provided in at least one of: a QoS Control field of the first frame or a High Throughput (HT) Control field of the first frame. The first identifier of the second STA may comprise at least one of: an association identifier (AID) of the second STA, an identifier of the P2P connection of the first STA with the second STA, an index associated with the second STA, or an address of the second STA. The first frequency allocation may correspond to a first resource unit (RU) and the second frequency allocation corresponds to a second RU. The second frame may comprise a multi-user Request to Send (MU-RTS) Triggered TXOP sharing (TXS) trigger (MRTT) frame. The first STA may further send, to the second STA, a fourth frame during the allocated time of the TXOP via the first frequency allocation. The fourth frame may comprise a trigger-based (TB) physical layer (PHY) protocol data unit (PPDU) or a non-TB PPDU. The first frame may comprise a trigger-based (TB) physical layer (PHY) protocol data unit (PPDU) or a non-TB PPDU. The first frame may further comprise a third identifier of the second STA. The third identifier of the second STA may comprise an association identifier (AID) of the second STA, an identifier of the P2P connection of the first STA with the second STA, an index associated with the second STA, or an address of the second STA. The address of the second STA may comprise a MAC address of the second STA or the N least significant bits (LSBs) of the MAC address of the second STA. The first frame may comprise a QoS data frame or a QoS null frame. The third identifier of the second STA may be provided in the HT Control field of the first frame. The HT Control field may comprise a Control ID subfield that indicates presence of information of the second STA in the HT Control field. The HT Control field may comprise a plurality of identifiers of a plurality of peer STAs of the first STA, the plurality of peer STAs comprising the second STA. The first frame may comprise an action frame, wherein the action frame may comprise a peer STA information element comprising the BSR for the P2P connection of the first STA with the second STA and/or the third identifier of the second STA. The third frame may comprise a plurality of identifiers of a plurality of peer STAs of the first STA, the plurality of peer STAs comprising the second STA. The plurality of peer STAs of the first STA may comprise STAs having an established TDLS connection with the first STA. A first STA device may comprise: one or more processors; and memory storing instructions that, when executed by the one or more processors, cause the first STA to perform the the described method, additional operations and/or include the additional elements. A system may comprise: an access point (AP) configured to perform the the described method, additional operations and/or include the additional elements; and a first station (STA) configured to send the first frame from the AP. A computer-readable medium storing instructions that, when executed, may cause performance of the the described method, additional operations and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

An access point (and an AP MLD) may communicate with one or more wireless devices (e.g., computing device(s), non-AP MLD(s), station(s), etc.). Computing devices described herein may support multiple technologies, and/or multiple releases of the same technology. Computing devices may have some specific capability(ies) depending on wireless device category and/or capability(ies). Computing devices referred to herein may correspond to a plurality of computing devices compatible with a given LTE, 5G, 3GPP or non-3GPP release, IEEE 802.11 Standard(s) (e.g., IEEE 802.1 1be, beyond IEEE 802.11be), or Wi-Fi Alliance (WFA) Standard(s) (e.g., Wi-Fi 7, Wi-Fi 8) technology. A plurality of computing devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of access points and/or a plurality of wireless devices in a coverage area that may not comply with the disclosed methods, for example, because those wireless devices and/or access points may perform based on other (e.g., older or newer) releases of LTE, 5G, 6G, 3GPP or non-3GPP, IEEE 802.11 Standards (e.g., IEEE 802.11be, beyond IEEE 802.11be), or Wi-Fi Alliance (WFA) Standards (e.g., Wi-Fi 7, Wi-Fi 8) technology.

Communications described herein may be determined, generated, sent, and/or received using any quantity of messages, information elements, fields, parameters, values, indications, information, bits, and/or the like. While one or more examples may be described herein using any of the terms/phrases message, information element, field, parameter, value, indication, information, bit(s), and/or the like, one skilled in the art understands that such communications may be performed using any one or more of these terms, including other such terms. For example, one or more parameters, fields, and/or information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multicarrier communications described herein. The device, or one or more devices such as in a system, may include one or more processors, memory, interfaces, and/or the like. Other examples may comprise communication networks comprising devices such as access points (APs), AP multi-link devices(MLDs), stations (STAs), non-AP STAs, non-AP MLDs, base stations, wireless devices or user equipment (wireless device), servers, switches, antennas, and/or the like. A network may comprise any wireless technology, including but not limited to, cellular, wireless, Wi-Fi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

## Claims

1. A method comprising:
receiving, by an access point (AP) from a first station (STA), a first frame comprising a buffer status report (BSR) associated with a peer-to-peer (P2P) connection between the first STA and a second STA; and
sending, by the AP and based on the BSR, a second frame, wherein the second frame indicates:
a first frequency allocation associated with a transmission by the first STA and during an allocated time of a transmission opportunity (TXOP) obtained by the AP; and
a first identifier of the second STA, wherein the second STA is a target STA of the transmission by the first STA via the first frequency allocation.

2. The method of claim 1, wherein the second frame further indicates a Triggered TXOP sharing (TXS) mode related to the TXOP, and wherein the method further comprises:
based on the TXS mode, sending, during the allocated time of the TXOP and by the first STA, a Clear to Send (CTS) frame, to the AP or the second STA.

3. The method of any one of claims 1-2, further comprising:
sending a Buffer Status Report Poll (BSRP) trigger frame to the first STA; and
receiving, based on the BSRP trigger frame, the first frame from the first STA.

4. The method of any one of claims 1-3, wherein the second frame further indicates:
a second frequency allocation to be used by a third STA during the allocated time of the TXOP; and
a second identifier of a fourth STA as a target STA associated with a transmission from the third STA and during the allocated time of the TXOP via the second frequency allocation.

5. The method of any one of claims 1-4, further comprising:
sending a trigger frame to the first STA; and
receiving, based on the trigger frame, a third frame comprising the first identifier of the second STA, wherein the third frame further comprises at least one of: a Quality of Service (QoS) data frame, a QoS null frame, or an action frame.

6. The method of any one of claims 1-5, wherein the BSR associated with the P2P connection of the first STA with the second STA is indicated in at least one of: a Quality of Service (QoS) Control field, or a High Throughput (HT) Control field of the first frame.

7. The method of any one of claims 1-6, further comprising determining the first frequency allocation, from among a plurality of frequency allocations, associated with use by the first STA and during the allocated time of the TXOP.

8. The method of any one of claims 1-7, wherein sending the second frame comprises sending the second frame on a first frequency subchannel and on a second frequency subchannel simultaneously.

9. The method of any one of claims 1-8, the method further comprises:
receiving, based on the second frame sent on the first frequency subchannel and from the first STA, a first Clear to Send (CTS) frame; and
receiving, based on the second frame sent on the second frequency subchannel and from a third STA, a second CTS frame.

10. The method of any one of claims 1-9, wherein the first identifier of the second STA comprises at least one of: an association identifier (AID) of the second STA, an identifier of the P2P connection of the first STA with the second STA, an index associated with the second STA, or an address of the second STA.

11. The method of any one of claims 1-10, wherein the address of the second STA comprises at least one of: a Medium Access Control (MAC) address of the second STA, or an N-least significant bits (LSBs) of the MAC address of the second STA.

12. The method of any one of claims 1-11, wherein the first frame further comprises a second identifier of the second STA; and
the second identifier of the second STA further comprises at least one of: an association identifier (AID) of the second STA, an identifier of the P2P connection of the first STA with the second STA, an index associated with the second STA, or an address of the second STA.

13. A computing device comprising:
one or more processors; and
memory storing instructions that, when executed by the one or more processors, cause the computing device to perform the method of any one of claims 1-12.

14. A system comprising:
an access point (AP) configured to perform the method of any one of claims 1-12; and
a first station (STA) configured to send the first frame from the AP.

15. A computer-readable medium storing instructions that, when executed, cause performance of the method of any one of claims 1-12.
